(19) **Europäisches Patentamt / European Patent Office / Office européen des brevets**

(11) **EP 3 166 407 B1**

(12) # FASCICULE DE BREVET EUROPEEN

(45) Date de publication et mention de la délivrance du brevet:
**25.03.2020 Bulletin 2020/13**

(21) Numéro de dépôt: **15748284.5**

(22) Date de dépôt: **09.07.2015**

(51) Int Cl.:
**A01N 59/00** (2006.01)    **A01N 65/00** (2009.01)
**A01N 65/03** (2009.01)    **A01P 21/00** (2006.01)

(86) Numéro de dépôt international:
**PCT/FR2015/051906**

(87) Numéro de publication internationale:
**WO 2016/005706 (14.01.2016 Gazette 2016/02)**

(54) **UTILISATION D'UNE COMPOSITION ORGANO-MINÉRALE POUR AUGMENTER L'ASSIMILATION DES ÉLÉMENTS NUTRITIFS DU SOL PAR LA PLANTE**

VERWENDUNG EINER ORGANOMINERALISCHEN ZUSAMMENSETZUNG ZUR ERHÖHUNG DER ASSIMILIERUNG VON NÄHRSTOFFEN AUS DEM BODEN DURCH PFLANZEN

USE OF AN ORGANO-MINERAL COMPOSITION TO INCREASE ASSIMILATION OF NUTRIENTS FROM THE GROUND BY THE PLANT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.07.2014 FR 1456741**

(43) Date de publication de la demande:
**17.05.2017 Bulletin 2017/20**

(73) Titulaire: **PRP Holding**
**75015 Paris (FR)**

(72) Inventeurs:
• **BOIFFARD, Françoise**
**33300 Bordeaux (FR)**

• **CAUMONT, Pierre**
**75017 Paris (FR)**
• **DARIDON, Bruno**
**54220 Malzeville (FR)**
• **LE TARNEC, Claude**
**56580 Brehan (FR)**

(74) Mandataire: **Ermeneux, Bertrand**
**AVOXA**
**5 allée Ermengarde d'Anjou**
**ZAC Atalante Champeaux - CS40824**
**35108 Rennes cedex 3 (FR)**

(56) Documents cités:
**EP-A2- 0 084 196     FR-A1- 2 539 736**
**FR-A1- 2 934 259**

**Description**

**ART ANTERIEUR**

Des sols froids et des températures basses, comme retrouvés généralement au printemps, peuvent retarder le semis ou le démarrage des cultures après le semis. Le démarrage des cultures est ainsi susceptible de végéter en début de cycle, en raison des conditions climatiques et de la disponibilité faible des éléments minéraux dans le sol à basse température. Or, pour qu'une culture produise de bons rendements, elle doit démarrer rapidement afin de profiter au maximum des mois propices d'été.

Certaines compositions fertilisantes, dites « starter », ont donc été développées pour augmenter la croissance et le rendement des plantes en stimulant le développement du système racinaire des jeunes plantes, au stade où elles sont peu développées, et lorsque l'activité de minéralisation de la microflore du sol est faible et par conséquent faiblement productrice d'éléments minéraux solubles.

Bien que les besoins en azote et phosphore soient peu élevés, ces éléments sont indispensables pendant la levée. La fertilisation « starter » est basée sur l'utilisation de fertilisants comprenant de l'azote et du phosphore. Elle garantit une sécurité de la fertilisation, un équilibre azote-phosphore (N/P) adapté aux besoins des jeunes plantes et une meilleure disponibilité du phosphore et des oligo-éléments.

La formulation « starter », la plus communément utilisée, est le phosphate d'ammonium, et typiquement la formulation dite « 18-46 » contenant 18% d'azote et 46% de $P_2O_5$.

Ces compositions « starter » sont généralement apportées à des doses de 100 à 150 kg/ha. Le fertilisant étant souvent agressif vis à vis de la plantule, il doit être décalé et enfouis en dessous de la ligne de semis, ou à côté, à environ 5 cm de la graine. Des formulations minérales plus concentrées peuvent également être apportées à plus faibles doses, typiquement entre 20 et 30 kg/ha, en microgranulés localisés dans la ligne de semis.

Récemment, sont également apparues des formulations « starter » basées sur des inoculums de microorganismes à base de bactéries et/ou de champignons mycorhizes, qui visent à solubiliser le phosphore et/ou à faciliter l'accès de la plante au phosphore. Ils permettent ainsi de pratiquer une agriculture plus économe en fertilisants minéraux avec un effet starter et des effets nutritionnels induits. Les microorganismes peuvent échanger le phosphore avec les plantes et bénéficient des rhizodépositions au sein de la rhizosphère.

Par exemple les bactéries du genre *Bacillus* se concentrent dans le sol proche de l'extrémité des racines et utilisent les produits de photosynthèse (sucres des rhizodépositions) générés par la plante. En contrepartie, ces bactéries aptes à solubiliser le phosphore du sol, en font donc bénéficier la plante. Certaines bactéries produisent également des molécules qui stimulent la croissance des racines.

Des relations symbiotiques s'établissent également avec les champignons mycorhiziens qui s'associent aux racines augmentant ainsi la capacité d'exploration du sol par la plante de façon significative. Cette association accroit l'efficacité de la fertilisation ainsi que la capacité de la plante à s'alimenter en eau en augmentant le volume de sol exploré.

Cette nouvelle génération d'engrais « starter » associe donc plusieurs types d'effets starter (chimiques et biologiques) et génère des impacts nutritionnels indirects précieux en fin de cycle, notamment en été quand des épisodes de stress hydrique peuvent apparaitre et impacter le rendement en baissant la productivité des cultures.

On trouve également des formulations d'inoculums microbiens solides (granulées, microgranulées) ou liquides intégrant des inoculums de microorganismes bénéfiques, notamment à base de bactéries solubilisant le phosphore, telles que *Bacillus, Pseudomonas,* des bactéries diazotrophes, ou de champignons mycorhiziens. Ces microorganismes peuvent être apportés soit au semis soit en enrobage de semences.

Par ailleurs, l'état de la technique décrit également des formulations de biostimulants des plantes, favorables à l'enracinement, comprenant par exemple de la chitine et/ou ses dérivés (FR 2941589, WO 0024255), des acides aminés ou des hydrolysats de protéines riches en aminoacides (FR2941592, EP1241149, WO2009082351, EP2229054), des acides humiques, des phytohormones (auxine) et/ou des facteurs de croissance comme les vitamines (WO2014049546, WO2008062035, WO 201386405), des acides et extraits phénoliques (WO2014062929), des lipo-chito-oligosaccharides favorisant la nodulation des plantes légumineuses (WO2010049817), des matières végétales fermentées ou compostées complexes riches en microorganismes et en métabolites issus de ces fermentations, (WO8200999, WO2006082264), des extraits d'algues, des extraits de microorganismes comme des levures (WO2012006382), des tensioactifs (WO2010068932, WO2013040403), des molécules caractérisées (WO2013159061, WO2011125714, WO2006000396), des matières végétales formulée, compositions et engrais organominéraux (FR 2357505, EP 2128116, EP 1103535, WO 2013159708, WO 2013159706, WO 2008105035, EP 2333086, WO 2014025275, ou WO 0196259).

Il existe ainsi de nombreuses formulations fertilisantes minérales biostimulantes, sous formes solides (granulées, microgranulées) ou liquides, à visée de nutrition des plantes, en particulier des formulations d'engrais minéraux « starter » de type N/P, des formulations d'engrais intégrant des amendements organiques visant à améliorer la structure physique du sol et ses propriétés chimiques de base, ou encore des formulations d'engrais organo-minérales.

Cependant, malgré le grand nombre de document décrivant des formulations organo-minérales ayant des effets bénéfiques sur les plantes et les cultures, les travaux antérieurs publiés sur l'effet de compositions organominérales biostimulantes sur la mycorhization sont rares.

La demande WO2010012952, précédemment déposée par la demanderesse, décrit une composition fertilisante minérale ayant des effets sur la structure des communautés microbiennes bactériennes du sol, sur les activités enzymatiques du sol et sur la croissance de la plante. Toutefois, ce document ne fournit aucune information sur les mycorhizes ou sur la mycorhization des racines; en outre, il ne vise pas un fertilisant apporté en mode localisé au semis. Par ailleurs, la demande décrit un produit purement minéral.

Le brevet WO 9107868 décrit l'emploi de molécules du type isoflavonoïdes pour stimuler les mycorhizes vésiculaires à arbuscules, et le brevet FR2865897 décrit des molécules du type strigolactones également pour favoriser la mycorhization. Le coût de ces molécules est néanmoins très élevé, ce qui limite leur utilisation.

Le brevet FR 2539736 décrit une formulation fertilisante permettant la mycorhization et la fructification des truffières, par une composition riche, comprenant de 50 à 80% de matières organiques animales fermentées, de 20 à 50% de matières végétales issues du soja, du coton, du blé, du riz ou de ricin et de 5 à 10% de carbonates. Les doses proposées vont de 0,3 à 3 kg/m2 soit 3 à 30 tonnes/ha. Cette application ne vise pas les cultures annuelles, mais les cultures pérennes de plantes truffières. En outre, la composition fertilisante est destinée à une application après la récolte.

Il existe donc un besoin pour de nouvelles formulations simples et à faible coûts de revient, actives à faible dose au champ notamment sur des plantes de grande culture, permettant d'augmenter le développement de la plante notamment en augmentant sa capacité d'assimilation des nutriments du sol par le biais d'une action stimulatrice sur le développement de la rhizosphère des plantes et/ou de la mycorhization des racines (avantageusement par la microflore native du sol dans lequel la plante est semée).

Il existe également un besoin pour des formulations alternatives aux inoculums bactériens et/ou aux formulations starter minérales (notamment les formulations 18/46), comprenant des quantités de phosphore et/ou d'azote compatibles avec une culture respectueuse de l'environnement.

## RESUME DE L'INVENTION

La présente invention a pour objet l'utilisation d'une composition organo-minérale selon la revendication 1, ladite composition comprenant la formule suivante:

| | |
|---|---|
| Matière organique végétale non fermentée | 13 à 45% |
| Carbonate de calcium | 10 à 26% |
| Dolomie | 15 à 38% |
| NaCl | 4,5 à 12,75% |
| $MgSO_4$ | 0 à 25% |
| Sulfate d'ammonium Phosphate d'ammonium | 0 à 32% |
| Lignosulfonate | 5 à 7 % |
| Soufre élémentaire | 0,00925 à 0, 6604 % |
| Sulfate de potasse | 0,5 à 2 % |

ladite matière organique végétale non fermentée, comprenant :

- de la farine d'algues ; et
- du tourteau végétal, ou un mélange de tourteaux végétaux, obtenu à partir d'amande, d'arachide, de carthame, de chanvre, de colza, de coprah, de coton, de karité, de lin, de maïs, de noix, d'olive, de palmiste, de pavot, de sésame, de soja ou de tournesol et/ou de la farine de pois, de férevole et/ou de lupin,

ladite composition comprenant une quantité d'azote totale comprise entre 1 et 8% et une quantité totale de phosphore, exprimée en P2O5, allant de 0 à 12%, la matière organique totale de ladite composition organo-minérale ayant un ratio analytique «carbone/azote organique» compris entre 8 et 12, les pourcentages étant exprimés en poids de matière sèche de chacun desdits composés par rapport au poids total de matière sèche de ladite composition organo-minérale

Typiquement, l'augmentation des capacités d'assimilation des éléments nutritifs du sol est obtenue par le développement de l'enracinement de ladite plante et/ou de la mycorhization racinaire de ladite plante.

Typiquement également, l'utilisation d'une composition organo-minérale selon l'invention est caractérisée en ce que ladite utilisation améliore en outre le taux de germination et/ou la vitesse de levée de ladite plante.

De préférence également, la matière organique végétale non fermentée de ladite composition organo-minérale comprend les constituants suivants:

| | |
|---|---|
| Farine d'algue verte du genre ULVA | 1 à 20% |
| Tourteau végétal ou farine de graine | 0 à 25 %, et notamment de 8 à 25% |

les pourcentages étant exprimés en poids de matière sèche de chacun desdits composés par rapport au poids total de matière sèche de ladite composition organo-minérale.

Typiquement, la composition organo-minérale utilisée comprend en outre au moins un élément, exprimé en milligramme par kilogramme de masse sèche, choisi parmi:

| | |
|---|---|
| Bore (mg/kg) | 15 à 40 |
| Iode (mg/kg) | 10 à 70 |
| Cuivre (mg/kg) | 12 à 25 |
| Fer (mg/kg) | 2000 à 4500 |
| Manganèse (mg/kg) | 100 à 250 |
| Zinc (mg/kg) | 30 à 150 |

Une composition organo-minérale particulièrement adaptée à une utilisation selon l'invention comprend en outre les composés suivants:

| | |
|---|---|
| Bicarbonate de sodium (%) | 0,00462 à 0,03962 |
| Acide borique (%) | 0,00063 à 0,00396 |
| Sulfate de cuivre (%) | 0,00063 à 0,00396 |
| Sulfate de fer (%) | 0,00040 à 0,00317 |
| Sulfate de manganèse (%) | 0,00462 à 0,03962 |
| Oxyde de zinc (%) | 0,00063 à 0,00396 |
| Molybdate de sodium (%) | 0,00063 à 0,00396 |
| Iodure de potassium (%) | 0,00040 à 0,00317 |

dans laquelle les pourcentages sont exprimés en poids de matière sèche de chacun desdits composés par rapport au poids total de masse sèche de ladite composition organo-minérale.

De préférence, la composition organo-minérale de l'invention est sous forme solide, et notamment sous forme de granulés.

Typiquement, une composition organo-minérale selon l'invention est destinée à un apport localisé au semis ou à la plantation, notamment pour les plantes annuelles ou bisannuelles, de grande culture.

On utilise généralement la composition selon l'invention selon une dose comprise entre 80 et 250 kg/ha et de façon préférée entre 100 et 120 kg/ha.

L'invention se rapporte également à une composition organo-minérale comprenant les éléments suivants :

| | |
|---|---|
| Carbonate de calcium (%) | 10 à 26 |
| Dolomie (%) | 15 à 38 |
| NaCl (%) | 0 à 1 |
| Sulfate de potassium (%) | 0,5 à 2 |
| MgSo4 (%) | 6 à 17 |
| Phosphate d'ammonium | 0 à 32 |
| Farine d'algue verte du genre ULVA (%) | 1 à 20 |
| Tourteau végétal ou farine de graine (%) | 0 à 25 |
| Lignosulfonates (%) | 5 à 7 |
| Bicarbonate de sodium (%) | 0, 0792 à 0,15849 |
| Soufre élémentaire (%) | 0,00925 à 0, 06604 |
| Acide borique (%) | 0,00063 à 0,00396 |
| Sulfate de cuivre (%) | 0,00024 à 0, 00396 |

(suite)

| Sulfate de fer (%) | 0,00087 à 0,04349 |
| Sulfate de manganèse (%) | 0,00462 à 0,03962 |
| Oxyde de zinc (%) | 0,00063 à 0,00396 |
| Molybdate de sodium (%) | 0,00063 à 0,00396 |
| Iodure de potassium (%) | 0,00040 à 0,00317 |

dans laquelle les pourcentages sont exprimés en poids de matière sèche de chacun des composés par rapport au poids total de matière sèche de ladite composition organo-minérale, le total étant ajusté à 100%.

## DESCRIPTION DETAILLEE

La présente invention apporte une solution au problème technique mentionné ci-dessus, par le biais de nouvelles compositions organo-minérales aptes à générer un effet « starter » sur les plantes, en augmentant leur capacité d'assimilation des éléments nutritifs du sol et en particulier en améliorant le développement de la rhizosphère des plantes et/ou en développant la mycorhization de leurs racines (avantageusement par la microflore native du sol dans lequel la plante est semée).

1. Utilisation selon l'invention

La présente invention concerne ainsi l'utilisation d'une composition organo-minérale particulière présentant un effet « starter », notamment pour améliorer le développement d'une plante en augmentant sa capacité d'assimilation des éléments nutritifs du sol et plus particulièrement en stimulant (i) le développement de l'enracinement de ladite plante et/ou (ii) la mycorhization racinaire de ladite plante.

En d'autres termes, la présente invention concerne ainsi un procédé pour améliorer le développement d'une plante, par application dans/sur le sol, ladite composition organo-minérale particulière.

Par « plante », on entend au sens de la présente invention, les plantes monocotylédones et les plantes dicotylédones. Les plantes, au sens de l'invention, englobent les plantes cultivées et notamment, les plantes de grande culture, les plantes cultivées pour l'horticulture ou pour les prairies d'élevage.

Par plante cultivées pour l'horticulture, entend par exemple les plantes cultivées pour l'arboriculture, notamment fruitière, les plantes à fleurs et/ou d'ornements, les plantes potagères et/ou maraichères.

Par « plante annuelle (ou bisannuelle) de grande culture », on entend de manière non limitative, les plantes céréalières à paille, le maïs, le tournesol, le colza, le soja, l'arachide, le sésame, le lin, le coton, la pomme de terre, la betterave et les plantes fourragères comme la luzerne ou le trèfle.

Les plantes céréalières à paille incluent notamment le blé, l'orge, le riz, le maïs, l'avoine, l'épeautre, le seigle, le quinoa, le millet.

Les plantes cultivées pour l'arboriculture fruitière comprennent notamment le prunier, le pêcher, le pommier, le poirier, l'abricotier, le cerisier, le figuier, le noyer, le noisetier, l'amandier, la vigne.

Les plantes potagères et/ou maraichères incluent notamment le pois protéagineux, le haricot, les flageolets, le petit pois, l'épinard, l'endive, le crosne, l'igname, la patate douce, le topinambour, les salades (endive, laitue, mâche, romaine, scarole, etc.), le céleri, le chou, l'épinard, le fenouil, l'oseille, la blette, la rhubarbe, l'asperge, le poireau, les bulbes des Amaryllidacées comme l'ail, l'échalote, l'oignon, les légumes-fleurs comme le chou-fleur, le brocoli, les légumes fruits comme l'aubergine, l'avocat, le concombre, le cornichon, la courge, la courgette, le melon, la pastèque, la poivron, les tomates, etc.

Par « effet starter » on entend un effet stimulant sur les premières étapes de développement de la plante, après implantation des semis.

Un effet starter correspond à une augmentation ou une stimulation d'au moins un des paramètres suivants :

i. taux de germination accru
ii. vitesse de levée accrue
iii. développement de l'enracinement accru
iv. mycorhization des racines accrue

Un effet starter se traduit de façon générale par une amélioration du développement (croissance et rendement) de la plante (ou de la culture) observable notamment par une augmentation de la biomasse aérienne et/ou de la hauteur des plantes aux stades jeunes, c'est-à-dire notamment jusqu'aux stades 6 à 8 feuilles.

Par « taux de germination accru » on entend selon l'invention une plus grande proportion des graines germées par rapport au nombre de graines semées.

Par « vitesse de levée accrue » on entend selon l'invention une plus grande vitesse de croissance des parties aériennes aux stades jeunes plantes (jusqu'aux stades 6 à 8 feuilles).

Par « stimulation du développement de l'enracinement », on entend typiquement une augmentation de la croissance racinaire en longueur, et/ou en degré de ramifications, et/ou une augmentation de la profondeur d'enracinement, et/ou une augmentation de la longueur racinaire cumulée.

La stimulation du développement de l'enracinement se traduit généralement par une augmentation de la surface d'échange. Un tel paramètre peut être calculé à partir des mesures de distribution des longueurs et diamètres de racines lavées et scannées par des logiciels d'analyse d'images dédiés comme par exemple Winrhizo (Regent Instruments Inc., Canada, voir notamment l'exemple 3.4). La stimulation du développement racinaire peut également être estimée par l'analyse de la distribution de la longueur des racines, et en particulier par l'augmentation de la présence de racines de petits diamètres (inférieures à 1,5 notamment, de préférence inférieures à 1 et en particulier inférieures à 0,5 mm), dont les propriétés d'absorption sont généralement plus importantes. L'augmentation du développement racinaire se traduit également par une augmentation du volume racinaire, estimé globalement par la mesure de la biomasse racinaire. La stimulation du développement de l'enracinement correspond donc à une augmentation de la rhizosphère, la zone d'interaction formée entre le sol et la plante.

Par « rhizosphère », on entend selon l'invention le volume de sol dans lequel, l'effet de la croissance de la plante sur les autres organismes vivants, y compris les micro-organismes associés, est perceptible et *vice versa*. La rhizosphère représente donc la zone du sol voisine des racines des plantes, où se concentrent les micro-organismes (microflore) interagissant de façon symbiotique avec les racines des plantes. Le développement de la rhizosphère permet d'augmenter notamment le volume d'exploration du sol par les plantes ainsi que les échanges entre la plante et la microflore du sol.

Les associations symbiotiques des microorganismes avec les racines des plantes sont typiquement représentées par les mycorhizes racinaires, résultats de l'association symbiotique entre des champignons et les racines des plantes.

Par « mycorhizes », on entend des endomycorhizes et des ectomycorhizes.

Les endomycorhizes (ou mycorhizes internes) qui pénètrent à l'intérieur des racines pour s'y associer sont la forme la plus répandue. Il en existe plusieurs types comme les endomycorhizes à arbuscules ou arbusculaires (MA), les endomychorizes à pelotons intracellulaires, les endomycorhizes éricoïdes et les ectendomychorizes. Les endomycorhizes à arbuscules, formées par des champignons de la division des Gloméromycètes, sont les plus répandues. Cette symbiose est rencontrée chez près de 80% des plantes dont la majorité des plantes de cultures (arbres fruitiers et d'ornements, céréales, plantes ornementales et maraichères, plantes aromatiques). Les MA sont ainsi nommées du fait du développement du champignon symbiotique sous forme de petits buissons (arbuscules) à l'intérieur des cellules. En formant ce nouvel organe, la plante modifie considérablement ses relations avec le sol et augmente, grâce aux hyphes extra radiculaires du champignon (mycelium extraracinaire) sa surface d'exploration du sol : on estime que le volume de sol exploité par la plante est multiplié par 1000 grâce aux mycorhizes.

Les ectomycorhizes (ou mycorhizes externes) concernent environ 5 % des plantes vasculaires, en majorité des arbres des forêts tempérées et boréales (comme les Fagacées, les Pinacées ou les Bétulacées) et des champignons de la division des Ascomycètes, des Basidiomycètes ou des Zygomycètes. Ces mycorhizes entourent simplement les racines, formant un manteau de mycélium et un réseau entre les parois des cellules de la racine.

La mycorhization racinaire permet donc à la plante d'absorber de façon optimale les nutriments (principalement azote, phosphore et oligoéléments) et l'eau du sol, ce qui permet d'améliorer la qualité et le rendement des cultures.

Par « stimulation de la mycorhization racinaire », on entend notamment une augmentation de la fréquence (%F) et/ou de l'intensité des mycorhizes (%M ou %m), avantageusement par le biais des mycorhizes natives du sol. Ces paramètres peuvent par exemple être calculés comme décrits dans l'exemple 2.

De préférence, on entend une augmentation de la fréquence et/ou de l'intensité des endomycorhizes à arbuscules. L'abondance en arbuscules (A% ou a%) peut être estimée selon les formules utilisées dans l'exemple 2.

Plus généralement, selon la présente invention, l'amélioration du développement de la plante, et/ou l'effet starter, est obtenu notamment en augmentant sa capacité d'assimilation des éléments nutritifs du sol. Une telle augmentation de la capacité d'assimilation des éléments nutritifs du sol est obtenue en stimulant le développement de la rhizosphère (typiquement exprimé par l'enracinement) de ladite plante et/ou de la mycorhization racinaire de ladite plante.

Par « stimulation » ou « augmentation », on entend une augmentation de l'un au moins des paramètres précités, dans une plante cultivée en présence de la composition organo-minérale de l'invention, par rapport à plante cultivée en l'absence de ladite composition organo-minérale.

Par « augmentation de la capacité d'assimilation d'une plante des éléments nutritifs du sol », on entend notamment l'augmentation de la capacité d'assimilation des éléments minéraux comme notamment le phosphore, l'azote ou le calcium et également une augmentation d'accès à l'eau par ladite plante. Une telle augmentation se traduit soit par une augmentation de la teneur en éléments minéraux dans la biomasse aérienne, notamment des teneurs en azote soluble et/ou des précurseurs de protéines, ou du calcium, soit par une augmentation de la biomasse aérienne de la plante.

L'utilisation de la composition accroît ainsi l'efficacité de fertilisation apportée à une plante en augmentant notamment sa capacité à absorber l'eau et à assimiler les éléments nutritifs du sol dans laquelle elle est implantée, en stimulant le développement de la rhizosphère et/ou le développement de la mycorhization des racines des plantes.

En effet, la demanderesse a démontré que :

- Malgré un déficit en nutriment comme l'azote et le phosphore, par rapport à un fertilisant minéral classique contenant 18 % d'azote et 46 % de phosphore (fertilisant 18/46 également appelé DAP dans les exemples), une composition selon l'invention permet d'obtenir des rendements et/ou une biomasse équivalente ou supérieure à celle obtenue avec le fertilisant minéral. En outre, les niveaux d'azote et ou de calcium, dans les parties aériennes des plantes ou dans la récolte, sont supérieurs, malgré un handicap de fertilisation minérale au semis. Ces résultats témoignent de la capacité accrue des plantes, traitées avec une composition de l'invention, d'absorber les nutriments du sol.
- L'utilisation de la composition de l'invention permet de stimuler le développement de la croissance racinaire, c'est-à-dire de la rhizosphère. En effet, l'utilisation de la composition, notamment lors d'un apport localisé au semis, entraine une augmentation du volume racinaire des cultures par rapport à des cultures dans lesquelles la composition n'a pas été utilisée. De façon générale, une augmentation significative de la surface d'échange estimée avec le logiciel Winrhizo (Regent Instrument Inc.) a été observée lors de l'utilisation d'une composition de l'invention. En outre, il a été montré, que l'utilisation d'une composition de l'invention permet d'augmenter plus particulièrement le nombre de petites racines (i.e. dont la taille est inférieure à 1 mm et notamment à 0,5 mm), par rapport à l'utilisation d'un fertilisant starter classique, comme le fertilisant minéral 18/46.
- La fréquence et l'intensité des mycorhizes, notamment des endomycorhizes à arbuscules ou arbusculaires (MA) est augmentée par l'utilisation de la composition de l'invention.

Ainsi l'augmentation du volume racinaire et/ou l'augmentation du volume de racines mycorhizées, induits par une composition selon l'invention, se traduisent par une augmentation de la capacité d'exploitation du sol par les racines, et de l'efficacité des échanges, concourant ainsi à une meilleure nutrition des plantes et à une amélioration de l'efficacité de la fertilisation par rapport à des plantes cultivées sans composition de l'invention.

De manière générale, la demanderesse a observé que l'augmentation du volume racinaire et/ou l'augmentation du volume de racines mycorhizées, qui est obtenu par l'utilisation de la composition de l'invention est illustrée par un accroissement de la biomasse végétale aérienne et du rendement des plantes.

La demanderesse a aussi observé que l'utilisation de la composition de l'invention permet en outre de favoriser le taux de germination des semences et la vitesse de levée.

De manière générale, la composition de l'invention peut donc être utilisée pour générer un effet starter complet (développement et mycorhization racinaire, augmentation de la vitesse de levée et du taux de germination)

La composition selon l'invention permet, sans vouloir être liée par une quelconque théorie, de bénéficier à la fois à la plante et aux microorganismes du sol. Cette contribution aide la plante à construire sa rhizosphère à une période de son cycle où la microflore du sol ne bénéficie pas encore des rhizodépositions puisque la plante n'est pas sevrée et qu'elle n'a pas encore une production significative d'assimilats photosynthétiques. Ainsi la formulation permet à la plante de mieux développer la synergie avec les champignons mycorhiziens, notamment vésiculaire à arbuscules.

La composition de l'invention permet, sans y être cependant incompatible, d'éviter le recours aux inoculums microbiens, dont l'efficacité sur les cultures est parfois aléatoire. En effet, de telles formulations sont difficiles à stabiliser pour maintenir l'activité biologique des souches sur une durée de temps importante, telle que 24 mois. En outre, il est délicat de disposer de souches, ou de mélanges de souches, restant compétitifs et efficaces, après introduction, *in situ* dans le sol où elles sont implantées, vis-à-vis des écosystèmes microbiens locaux ou des conditions pédoclimatiques locales.

Les résultats montrent également que l'utilisation d'une composition selon l'invention permet d'obtenir des résultats équivalents, ou meilleurs qu'avec l'utilisation d'un fertilisant minéral N/P starter de type 18/46. En agissant directement sur les capacités d'assimilation des nutriments du sol, la composition de l'invention limite, sans l'exclure, le recours exogène aux engrais minéraux et représente par conséquent une contribution à des pratiques de fertilisation minérale mieux raisonnées et plus économes en intrants azotés et phosphatés.

2. Composition

La composition organo-minérale utilisée dans le cadre de l'invention comprend les composés suivants:

Matière organique végétale non fermentée     13 à 45 %

(suite)

| | |
|---|---|
| Carbonate de calcium | 10 à 26 % |
| Dolomie | 15 à 38 % |
| Sel | 0 à 1 % |
| MgSO4 | 4,5 à 12,75 % |
| sulfate d'ammonium | 0 à 25% |
| Phosphate d'ammonium | 0 à 32 % |
| Lignosulfonate | 5 à 7 % |
| Soufre élémentaire | 0,00925 à 0, 6604 % |
| Sulfate de potasse | 0,5 à 2 % |

Les pourcentages ci-dessus représentent les pourcentages en poids de matière sèche de chacun des composés par rapport au poids total de matière sèche de ladite composition organo-minérale.

Cette composition organo-minérale, selon l'invention, comprend des concentrations réduites en azote et phosphate par rapport aux formulations minérales classiques.

En effet, la composition de l'invention comprend une quantité d'azote totale comprise entre 1 et 8 % en poids par rapport au poids total de matière sèche de la composition et notamment une quantité d'azote organique comprise entre 1 et 3 % en poids par rapport au poids total de matière sèche de la composition.

La composition comprend également une quantité totale de phosphore (exprimé en $P_2O_5$) allant de 0 à 12 %.

La matière organique de la composition organo-minérale de l'invention a un ratio analytique carbone total/azote organique qui varie de 8 à 12. Par matière organique totale on entend notamment la matière organique constituée par la farine d'algue et/ou le tourteau végétal et/ou la farine de graine et/ou les lignosulfonates.

La matière organique végétale" fraiche », non fermentée, est une matière organique végétale n'ayant pas subi de dégradation aérobique (en particulier non compostée) ou anaérobique.

De préférence, la composition ne comprend pas de matière organique fermentée, et notamment aucune matière organique non végétale.

La matière organique végétale comprend:

- de la farine d'algue et
- du tourteau végétal et/ou de la farine de pois, de féverole et/ou de lupin.

La farine d'algue est de préférence de la farine d'algue verte de l'ordre des Ulvales et notamment l'algue verte du genre *Ulva.*

Le tourteau végétal correspond aux résidus solides obtenus après extraction de l'huile des graines ou des fruits oléagineux. Il comprend, un tourteau ou un mélange de tourteaux obtenus à partir d'amande, d'arachide, de carthame, de chanvre, de colza, de coprah, de coton, de karité, de lin, de maïs, de noix, d'olive, de palmiste, de pavot, de sésame, de soja ou de tournesol. De préférence, on utilise du tourteau (ou un mélange de tourteau) de colza, ou de tournesol.

• De préférence on utilise de la farine de pois.

Dans un mode de réalisation, la composition comprend de 1 à 20 % en poids de farine d'algue et de 0 à 25 % en poids de tourteau végétal et/ou de farine de graine, par rapport au poids total de matière sèche de la composition.

Les lignosulfonates, co-produits de de la production de pâte à papier à partir de bois feuillus, de pins ou d'eucalyptus, représentent de 5 à 7 % du poids total de matière sèche de la composition. Les lignosulfonates sont généralement utilisées sous forme de solution à 45-55% de matière sèche et sont employés en tant que liant de granulation.

Dans un mode de réalisation de la composition de l'invention, le $MgSO_4$ est sous forme de kiésérite.

La kiésérite est un sulfate de magnésium exclusivement d'origine minière et est produite à partir de sels marins de chlorure de sodium, chlorure de potassium et sulfate de magnésium. On estime que la kiésérite contient 75 % de $MgSO_4$. Typiquement une composition de l'invention comprend de 6 à 17 % en poids de kiésérite par rapport au poids total de la composition.

La dolomie est une roche sédimentaire carbonatée composée d'au moins 50 % de dolomite, c'est-à-dire d'un carbonate mixte de calcium et de magnésium, de composition chimique $CaCO_3, MgCO_3$.

Le sel utilisé dans la composition est de préférence le NaCl, de préférence sous forme de sel gemme.

Le phosphate d'ammonium est typiquement le diammonium phosphate, de formule $(NH_4)2PO_4$.

Typiquement, une composition de l'invention a un pH dans l'eau compris entre 5 et 8. Dans un mode de réalisation, la composition organo-minérale de l'invention comprend également au moins un composé additionnel ci-dessous, dans les quantités suivantes:

| | |
|---|---|
| - Bore (mg/kg) | 15 à 40 |
| - Iode (mg/kg) | 10 à 70 |
| - Cuivre (mg/kg) | 12 à 25 |
| - Fer (mg/kg) | 2000 à 4500 |
| - Manganèse (mg/kg) | 100 à 250 |
| - Zinc (mg/kg) | 30 à 150 |

les quantité ci-dessus étant exprimées en mg par kg de matière sèche de la composition. De façon préférée, la composition organo-minérale utilisée selon l'invention comprend les composés additionnels suivants :

| | |
|---|---|
| - Bicarbonate de sodium (%) | 0, 0792 à 0,15849 |
| - Soufre élémentaire (%) | 0,00925 à 0, 06604 |
| - Acide borique (%) | 0,00063 à 0,00396 |
| - Sulfate de cuivre (%) | 0,00024 à 0, 00396 |
| - Sulfate de fer (%) | 0,00087 à 0,04349 |
| - Sulfate de manganèse (%) | 0,00462 à 0,03962 |
| - Oxyde de zinc (%) | 0,00063 à 0,00396 |
| - Molybdate de sodium (%) | 0,00063 à 0,00396 |
| - Iodure de potassium (%) | 0,00040 à 0,00317 |

les pourcentage ci-dessus consistant en les pourcentages de chacun des composés par rapport au poids total de matière sèche de ladite composition organo-minérale.

Une composition organo-minérale utilisée de façon particulièrement préférée selon l'invention comprend donc la formule suivante :

| | |
|---|---|
| - Carbonate de calcium, $CaO_3$ (%) | 10 à 26 |
| - Dolomie, $CaMg(CO_3)2$ (%) | 15 à 38 |
| - NaCl (%) | 0 à 1 |
| - Sulfate de potasse, $K_2SO_4$ (%) | 0,5 à 2 |
| - Sulfate d'ammonium, $NH_4SO_4$ (%) | 0 à 25 |
| - Kiésérite (%) | 6 à 17 |
| - Phosphate d'ammonium, $NH4(_2)PO_4$ | 0 à 32 |
| - Farine d'algue (%) | 1 à 20 |
| - Tourteau végétal ou farine de graine (%) | 0 à 25 |
| - Lignosulfonates (%) | 5 à 7 |
| - Bicarbonate de sodium $NaHCO_3$(%) | 0, 0792 à 0,15849 |
| - Soufre élémentaire (%) | 0,00925 à 0, 06604 |
| - Acide borique (%) | 0,00063 à 0,00396 |
| - Sulfate de cuivre (%) | 0,00024 à 0, 00396 |
| - Sulfate de fer (%) | 0,00087 à 0,04349 |
| - Sulfate de manganèse (%) | 0,00462 à 0, 03962 |
| - Oxyde de zinc (%) | 0,00063 à 0,00396 |
| - Molybdate de sodium (%) | 0,00063 à 0,00396 |
| - Iodure de potassium (%) | 0,00040 à 0,00317 |

les pourcentage ci-dessus consistant en les pourcentages de chacun des composés par rapport au poids total de matière sèche de ladite composition organo-minérale.

Des compositions préférées selon l'invention ont par exemple les formules suivantes, inclues dans la formule ci-dessus :

| Matière Première (%masse sèche) | Composition C1 | Composition C2 | Composition C3 | Composition C4 |
|---|---|---|---|---|
| Carbonate de calcium, $CaCO_3$ | 24,25 | 25,25 | 10,75 | 10,75 |
| Dolomie $CaCO_3,MgCO_3$ | 38,00 | 38,00 | 18,00 | 24,00 |
| NaCl | 0,50 | 0,00 | 0,50 | 0,50 |
| Sulfate de potasse, $K_2SO_4$ | 0,70 | 0,70 | 0,70 | 0,70 |
| sulfate d'ammonium, $(NH_4)_2SO_4$ | 0,00 | 0,00 | 0,00 | 10,00 |
| Kieserite, $MgSO_4$ | 9,50 | 10,00 | 17,00 | 17,00 |
| Diammonium Phosphate, $(NH_4)_2PO4$ | 0,00 | 0,00 | 26,00 | 10,00 |
| farine d'algue verte du genre *Ulva* | 1,00 | 20,00 | 1,00 | 1,00 |
| Tourteau de graine oléagineuse ou farine de pois | 20,00 | 0,00 | 20,00 | 20,00 |
| lignosulfonate | 6,00 | 6,00 | 6,00 | 6,00 |
| bicarbonate de sodium | 0,01453 | 0,01453 | 0,01453 | 0,01453 |
| soufre élémentaire | 0,01453 | 0,01453 | 0,01453 | 0,01453 |
| acide borique | 0,00085 | 0,00085 | 0,00085 | 0,00085 |
| Sulfate de cuivre | 0,00087 | 0,00087 | 0,00087 | 0,00087 |
| sulfate de fer | 0,00955 | 0,00955 | 0,00955 | 0,00955 |
| sulfate de manganèse | 0,00726 | 0,00726 | 0,00726 | 0,00726 |
| oxyde de zinc | 0,00087 | 0,00087 | 0,00087 | 0,00087 |
| molybdate de sodium | 0,00087 | 0,00087 | 0,00087 | 0,00087 |
| iodure de potassium | 0,00087 | 0,00087 | 0,00087 | 0,00087 |
| **total** | **100,00%** | **100,00%** | **100,00%** | **100,00%** |

3. Formulation de la composition

En général, la composition organo-minérale de l'invention est une composition solide, qui se présente avantageusement sous forme de granulés.

L'obtention de granulés aptes à la mise en œuvre de l'invention peut être réalisée suivant des techniques de granulation bien connues de l'homme du métier, comme :

- le semoulage en lit fluidisé
- la granulation sur plateau granulateur
- la granulation en tube
- la granulation par extrusion sur presse à filière annulaire ou filière plate, ou
- la granulation par compactage

L'étape de granulation est suivie d'un séchage éventuel puis d'un tamisage et d'un dépoussiérage.

Cette formulation permet de former le produit en granulés de la dimension voulue pour obtenir une bonne tenue mécanique, de faciliter le conditionnement, de garantir une conservation optimale et un dosage ainsi qu'un épandage régulier au champ.

De manière préférée, les granulés de la présente invention sont obtenus par deux procédés distincts répondant aux nécessités du dosage et de l'épandage sur les semoirs agricoles courants.

Ils peuvent être :

- soit formés en granulés semoulés, séchés et tamisés à une granulométrie allant de 0,25 à 2 mm, pour la localisation dans la ligne de semis pour une utilisation, par exemple à des doses de 25 à 40 kg/ha ;
- soit formés en granulés arrondis ou cylindriques, séchés et tamisés à une granulométrie allant de 2,5 à 4,5 mm.

De tels granulés peuvent être obtenus selon le procédé décrit dans les demandes de brevet FR2778120 et FR2897148.

De préférence, après séchage et tamisage, les formulations de l'invention sous forme de granulés sont constituées à 90 % au moins de granulés dont la granulométrie varie de 2,5 à 5 mm et de préférence encore de 2,5 à 4,5 mm.

4. Mise en œuvre de la composition

De façon générale, la composition selon l'invention est adaptée à :

- un apport localisée au semis ou à la plantation, ou
- un apport par épandage généralisé de surface .

La composition selon l'invention peut être utilisée selon des doses allant de 80 à 250 kg/ha de sol cultivé, de préférence encore de 80 à 150 kg/ha de sol cultivé et notamment de 100 à 120 kg/ha de sol cultivé.

De façon préférée, les compositions sont apportées au semis, à proximité de la graine, dans la ligne de semis ou typiquement à une distance de 3 à 5 cm de la graine.

Les formulations particulièrement adaptées à un tel apport sont notamment les formulations en granulés arrondis ou cylindriques séchés et tamisés à une granulométrie moyenne allant de 2,5 à 4,5 mm. Ce type de formulation est également adapté à un épandage centrifuge.

Selon un autre aspect, l'invention est également relative à un procédé pour améliorer le développement d'une plante en augmentant sa capacité d'assimilation des éléments nutritifs du sol, avantageusement par le biais d'une stimulation du développement de la rhizosphère de ladite plante et/ou de la mycorhization racinaire de ladite plante.

Ce procédé comprend au moins une étape au cours de laquelle on apporte de façon localisée au semis ou à la plantation, ou par épandage, la composition organo-minérale telle que décrite dans la présente demande.

Dans certains modes particuliers de réalisation de l'invention, une compensation azotée peut être ajoutée en plus d'une composition organo-minérale de l'invention. De préférence dans ces modes de réalisation, une compensation azotée est ajoutée à la composition de l'invention à une dose allant de 10 à 20 kg/ha, notamment de 15 à 20 kg/ha et typiquement de 18 kg/ha. De préférence encore, l'azote est ajouté sous forme de nitrate d'ammonium.

De manière générale, sauf indication contraire, les bornes des intervalles mentionnés dans la présente demande sont comprises dans lesdits intervalles. Les modes de réalisation décrits dans la présente demande peuvent être, sauf mention contraire, combinés en eux.

L'invention est encore illustrée de façon non-limitative par les exemples qui suivent.

**EXEMPLES :**

Les compositions C1 à C4 mentionnés dans les exemples ci-après correspondent aux compositions C1 à C4 décrite ci-dessus au point 2.

**1- Exemple 1 : Essais Maïs Microcosme**

Cet essai comporte 4 Modalités, 5 réplicats, 3 plantes par pot, soit 20 pots au total (5x4) et 60 plantes au total (5x4x3).

3 modalités de cultures sont suivies dont 3 modalités de fertilisation :

1. Témoin non traité (TNT),
2. Ajout DAP (phosphate d'ammonium titrant 18% d'azote et 46% de P205),
3. Ajout Composition 1 (C1)
4. Ajout Composition 1, avec compensation azotée au niveau du DAP (C1C) Les Microcosmes sont des pots de 3 litres

- Substrat : sol d'Epoisses (France-Côte d'or) tamisé à 6 mm + perlite (3 :1 v/v)
- Plante : maïs, graines brutes non traitées
- Expérimentation menée sous serre en conditions contrôlées avec une température de 23°C le jour et 18°C la nuit.

Au, vu de la faible dose de fertilisant par pot, équivalente à la dose d'emploi agronomique de 100 kg/ha, les produits (ou compositions) fertilisants sous forme de granulés sont broyés pour une pesée précise et une bonne homogénéité des apports unitaires.

Les règles d'apport sont celles du « down-sizing » volumique : Au champ on considère les 20 premiers centimètres pour la fertilisation, soit un volume de 0,2x1x1=0,2 $m^3$ au champ. Pour 100 kg/ha (compositions C1 ou DAP) on applique donc 10 $g/m^2$ soit 10g/0,2 $m^3$. Une telle valeur est appliquée dans les pots, soit pour 3L, une dose de 150 mg de fertilisant broyé.

Les produits broyés et pesés, C1 et DAP sont respectivement appliqués à 3 cm des graines au centre des pots. Pour la modalité C1C, corrigée en azote au même niveau que le DAP, on apporte 18kg/ha d'azote en plus de C1, sous forme nitrate d'ammonium.

Les caractéristiques du sol d'Epoisse sont les suivantes :

- Argile : 47.6 %, Limon : 46.7 %, Sable : 5.7 %
- Azote organique : 1.8 g.kg-1
- Carbone organique : 18.2 g.kg-1
- CEC : 25.3 meq
- CaCO3 : 10 g.kg-1
- pH : 7.8

Les cinétiques de germination sont suivies et rapportées dans le tableau ci-dessous :

| jour après semis | % germination TNT | % germination DAP | % germination C1 | % germination C1C |
|---|---|---|---|---|
| Azote apporté kg/ha | 0 | 18 | 1 | 18 |
| Phosphore apporté kg/ha | 0 | 46 | 0 | 0 |
| 4 (germination) | 13,33% | 20,00% | 46,67% | 40,00% |
| 5 (germination) | 40,00% | 46,67% | 66,67% | 60,00% |
| 6 (germination) | 53,33% | 53,33% | 80,00% | 66,67% |
| 7 (germination) | 53,33% | 66,76% | 86,67% | 66,67% |
| 8 (germination) | 60,00% | 73,33% | 86,67% | 66,67% |

On constate que les 3 modalités de fertilisation induisent un effet starter sur la germination des graines par rapport au témoin non traité TNT, avec une germination accrue dès le 4ème jour et une levée qui se stabilise au 8ème jour. Au final, le produit C1 est celui qui produit une germination la plus précoce et induit le meilleurs taux de levée au final.

Les mesures de biomasses aériennes sèches sont réalisées au point final, à 25 jours, et sont listées ci-dessous. Les modalités de fertilisation, C1, DAP et C1C entrainent une augmentation du poids de la biomasse aérienne, de la biomasse racinaire et du ratio de ces biomasses vis-à-vis du témoin non traité.

| Modalité | Poids de la biomasse aérienne sèche (g/plante) | poids de la biomasse racinaire sèche (g/plante) | Ratio Biomasses aérienne/racinaire |
|---|---|---|---|
| TNT | 0,68 | 0,55 | 1,34 |
| DAP | 0,90 | 0,63 | 1,49 |
| C1 | 0,82 | 0,56 | 1,53 |
| C1C | 1,02 | 0,62 | 1,66 |

L'effet starter du produit C1 est ainsi confirmé sur la germination, sur la levée et la biomasse obtenue, par rapport à la modalité TNT. La complémentation en azote de la modalité C1 dans la modalité CIC permet de dépasser les performances de la modalité DAP.

Après germination puis levée, on note que les trois modalités de fertilisation, C1, DAP et C1C stimulent la croissance des plantes sur 25 jours. Les meilleurs résultats sur la croissance sont obtenus dans les modalités C1C et DAP. Cela témoigne du rôle de l'azote, mais la modalité C1 montre un effet bénéfique alors qu'elle n'apporte ni azote (1% étant peu significatif sur le plan nutritionnel) ni phosphore.

## 2- Exemple 2 : Comptage mycorhizes

Dans l'expérimentation de l'exemple 1, sur maïs en pots ci-dessus, les racines ont été analysées en point final, quant à leur colonisation par les champignons mycorhizes totaux et sur les mycorhizes à arbuscules, présents naturellement dans le sol d'Epoisse utilisé pour l'expérimentation.

Les racines lavées ont été traitées par la méthode de coloration au bleu coton et observées au microscope pour les notations de fréquence et d'intensité de mycorhization.

On décolore d'abord les cellules végétales des racines en conservant leurs parois, puis on colore les parois des cellules du champignon grâce à un colorant spécifique. On commence par laver précautionneusement les racines fines et on les coupe en fragments de longueur de 2 cm. Les racines lavées sont reprises en dans la potasse 10 %, et chauffées au bain-marie à 90° C durant 30 min. La solution est éliminée par filtration sur tamis et on rince les racines décolorées avec l'eau acidifiée (eau distillée + un peu d'acide chlorhydrique très dilué) pour neutraliser. Les racines sont colorées au bleu (bleu coton : bleu de méthyle 1 % et acide acétique 3 %) et maintenues bain marie 10 à 15 minutes. On filtre à nouveau puis on rince à l'eau distillée.

Pour finir, on passe à l'observation des racines montées entre lame et lamelle dans le lactoglycérol (1 volume d'acide lactique 100% + 1 volume glycérol + 1 volume d'eau) pour l'observation au microscope.

Après les notations issues des observations d'une longueur cumulée de racines suffisante, soit 25 cm de longueur cumulée par modalité de fertilisation, les paramètres (%F, %M, %A et %a) ont été calculés afin de comparer les effets des modalités de fertilisation sur la mycorhization des racines :

Les paramètres %F, %M et %A sont calculés d'après les formules suivantes:

**(1) Fréquence des mycorhizes dans le système racinaire (F%):**

$$\mathbf{F\%} = (\text{nb de fragments mycorhizés/ nb total de fragments})*100$$

La notation est 0 ou 1 selon que chaque champ observé présente des mycorhizes ou pas jusqu'à l'observation de 25 cm de racines colorées par modalité de fertilisation.

**(2) Intensité de la colonisation mycorhizienne dans le système racinaire (M%) :**

$$\mathbf{M\%} = (95n5+70n4+30n3+5n2+n1)/(\text{nb total de fragments})$$

où n5 = nombre de fragments classés 5 ; n4 = nombre de fragments classés 4 ; etc.

On utilise une grille de notation (indice n) allant de 1 à 5 pour classifier l'intensité de colonisation de chaque champ d'observation des 25 cm cumulés de racines observées.

**(3) Intensité de la colonisation mycorhizienne dans les fragments mycorhizés (m%) :**

$$\mathbf{m\%} = M\%*(\text{nb total de fragments})/(\text{nb total de fragment mycorhizés})$$

**(4) Abondance en arbuscules dans les parties mycorhizées des fragments racinaires (a%):**

$$\mathbf{a\%} = (100mA3+50mA2+10mA1)/100$$

où mA3, mA2, mA1 = % de m, classés A3, A2, A1, respectivement, avec mA3=((95n5A3+70n4A3+30n3A3+5n2A3+n1A3)/nb myco)*100/m ;etc...

On utilise pour cela une grille de notation de l'abondance en arbuscules (Ai avec i allant de 1 à 3) de chaque champ observé sur une longueur cumulée de 25 cm de racines colorées.

**(5) Abondance en arbuscules dans le système racinaire (A %) :**

$$\mathbf{A\%} = a*(M\%/100)$$

*Résultats observés sur la Fréquence de colonisation (F%)*

| Modalités de fertilisation | F% moyenne |
|---|---|
| TNT | 86,0 |
| DAP | 82,7 |
| **C1** | **93,3** |
| C1C | 90,0 |

*Résultats observés sur l'intensité de colonisation (M%)*

| Modalité de fertilisation | M% moyenne |
|---|---|
| TNT | 43,7 |
| DAP | 48,7 |
| **C1** | **68,8** |
| C1C | 58,8 |

*Résultats observés sur la l'abondance en arbuscules (A%)*

| Modalité de fertilisation | A% moyenne |
|---|---|
| TNT | 24,6 |
| DAP | 31,6 |
| C1 | **49,3** |
| C1C | 43,1 |

*Résultats observés sur l'intensité de la colonisation dans les fragments mycorhizés (m%)*

| Modalité de fertilisation | m% moyenne |
|---|---|
| TNT | 50,6 |
| DAP | 58,6 |
| C1 | **73,8** |
| C1C | 65,1 |

*Résultats observés sur l'abondance en arbuscules dans les fragments mycorhizés (a%)*

| Modalité de fertilisation | a% moyenne |
|---|---|
| TNT | 56,1 |
| DAP | 64,3 |
| C1 | 71,5 |
| C1C | **73,1** |

On constate donc que les modalités de fertilisation C1 et C1C permettent un gain sensible et systématique sur les paramètres de mycorhization tant en fréquence qu'en intensité par rapport à la modalité TNT et par rapport à la modalité DAP. En outre de façon générale, les meilleurs résultats sur la mycorhization sont obtenus par l'utilisation de la composition C1 dans la modalité C1. Pour les arbuscules on observe également un accroissement sensible sur les paramètres relatifs à la fréquence et à l'intensité de mycorhization. Ces observations témoignent de l'effet biostimulant des modalités C1 et C1C pour le couple sol-plante, notamment sur l'amélioration de la qualité de la mycorhization par la microflore locale, en l'absence d'inoculation extérieure par des souches exogène sélectionnées.

### 3- Exemple 3 : Essais Maïs rhizotrons

Dans cette expérimentation, sont comparées plusieurs modalités de fertilisation sur le maïs en systèmes rhizotrons sous serre. L'objectif est de visualiser les racines et de quantifier leur cinétique de développement en parallèle.

Protocole :

- Les rhizotrons sont construits en plexiglass transparent et présentent un volume utile de 50cm x 50cm x 4cm = 10 000 cm3
- Le substrat est un mélange de sol limono-argileux de Bréhan (France-56) 70% allégé de 30% de tourbe. Le sol a les caractéristiques analytiques suivantes : Phosphore assimilable = 407 mg/kg, Calcium échangeable = 1046 mg/kg, Magnésium échangeable = 92 mg/kg, Potassium échangeable = 258 mg/kg, CEC = 8,6 meq/100g, MO = 3,2%, Azote total = 1,6 g/kg, C/N = 11,8)
- La plante semée est du maïs grain non traité, soient 4 graines par rhizotron, 6 répétitions = 24 graines par modalité.
- Les matières fertilisantes sont localisées, au semis à 5 cm de chaque graine et sont dosées par pesée précise tel que décrit dans l'exemple n°1 à une quantité correspondant à 100 kg/ha.
- Les modalités comparées sont les suivantes : fertilisation Starter 18-46 (DAP), ou avec les produits C1 et C2.
- Après la germination, les notations ont été effectuées à 3 dates: T1, T2, T3, correspondant respectivement à : J+6 jours, J+10 jours et J+13 jours.
- A chacune de ces dates sont effectuées des mesures d'indice d'enracinement selon une grille de notation prédéfinie en fonction de la densité et du degré de ramification des racines vues à travers un grille transparente de maille carrées de 5x5cm. Des photographies sont prises pour faciliter les notations ultérieures avec lesquelles on déduit un indice d'enracinement pour les différentes profondeurs afin d'avoir un profil numérique d'enracinement moyen pour chaque modalité.
- Aux mêmes dates T1, T2 et T3, sont réalisées des mesures de hauteurs de plantes sur les parties aériennes pour compléter le suivi cinétique. En point final à J+13, les rhizotrons sont démontés pour récupérer les parties aériennes, et les parties racinaires sont lavées puis analysées par analyse d'image avec l'outil d'analyse d'image Winrhizo (Regent Instrument, 2672 Ch Ste Foy, Sainte-Foy-Sillery-Cap-Rouge, QC G1V 1V4, Canada).
- Les mesures Winrhizo permettent d'accéder aux paramètres de longueur totales de racines et de leur distribution en classes de diamètres après étalonnage dimensionnel du scanner puis de calculer des surfaces d'échange. (Surface d'échange calculée = longueur totale de racines par clase de diamètre x surface d'un cercle du diamètre de la classe].

### 3.1 Résultats des germinations du maïs en rhizotrons

| Traitements | | 18-46 (DAP) | C1 | C2 |
|---|---|---|---|---|
| **Levée (%)** | J3 | | | |
| | *moyenne* | 0 | 17 | 17 |
| | J4 | | | |
| | *moyenne* | 66 | 100 | 75 |
| | J5 | | | |
| | *moyenne* | 75 | 100 | 83 |
| | J6 | | | |
| | *moyenne* | 75 | 100 | 83 |

La germination du Maïs pour les modalités C1 et C2 est plus précoce que pour la modalité de fertilisation starter classique, en outre au final le taux de germination final (à J6) est plus élevé également dans les modalités C1 et C2.

### 3.2 Résultats des cinétiques des croissances de plantes :

| | | 18-46 (DAP) | C1 | C2 |
|---|---|---|---|---|
| **Hauteur Moyenne (cm)** | J5 | | | |
| | *Moyenne* | 2.556 | 3.6 | 2.87 |
| | J6 | | | |
| | *moyenne* | 4.93 | 6.092 | 5.390 |
| | J7 | | | |
| | *moyenne* | 8.044 | 9.658 | 8.9 |
| | J10 | | | |
| | *moyenne* | 18.489 | 20.542 | 19.370 |
| | J11 | | | |
| | *moyenne* | 23.167 | 25.067 | 23.77 |
| | J12 | | | |
| | *moyenne* | 29.011 | 30.225 | 37.611 |
| | J13 | | | |
| | *moyenne* | 34.1 | 35.6 | 34.44 |

Au final les croissances sont équivalentes entre les modalités telles qu'évaluées via le critère de hauteur moyenne des plantes.

### 3.3 Résultats des mesures de biomasses aériennes et racinaires moyennes par rhizotron en point final à J+13 :

| Traitements | | 18-46 (DAP) | C1 | C2 |
|---|---|---|---|---|
| **Biomasse Aérienne (g)** | T3 | | | |
| | *moyenne* | 2.881 | 4.536 | 3.595 |
| **Biomasse racinaire (g)** | T3 | | | |
| | *moyenne* | 3.718 | 5.793 | 4.522 |

La biomasse produite est plus importante pour les modalités C1 et C2 qu'avec l'ajout de la composition starter classique (DAP 18-46). Ce résultat est à rapprocher du meilleur enracinement démontré ci-après.

### 3.4 Résultats des notations des images latérales des rhizotrons pour les modalités Starter DAP d'une part et C1 et C2 d'autre part

| MOYENNES DES MOYENNES à T3 (J+13 jours) | | | |
|---|---|---|---|
| **profondeur (cm) et indices d'enracinement moyens du maïs** | DAP 18-46 | C1 1.0 | C2 1.0 |
| 0-5cm | 1,9 | 2,9 | 2,4 |
| 5-10cm | 1,8 | 2,9 | 2,5 |
| 10-15cm | 1,8 | 2,6 | 2,1 |
| 15-20cm | 1,0 | 1,7 | 1,6 |
| 20-25cm | 0,7 | 1,6 | 1,3 |
| 25-30cm | 0,4 | 1,1 | 1,2 |
| 30-35cm | 0,4 | 0,9 | 0,7 |
| 35-40cm | 0,1 | 0,7 | 0,5 |

(suite)

| MOYENNES DES MOYENNES à T3 (J+13 jours) | | | |
|---|---|---|---|
| profondeur (cm) et indices d'enracinement moyens du maïs | DAP 18-46 | C1 1.0 | C2 1.0 |
| TOTAL | 8,0 | 14,4 | 12,1 |

On constate dans cette expérimentation, que les 2 formulations C1 et C2, chacune à 1% d'azote total et 0% de phosphore, permettent un gain d'enracinement significatif par rapport à la modalité starter DAP à 18% d'azote et 46% de phosphore.

Cet avantage permet aux plantes d'accroître le volume de sol exploré et d'accéder ainsi plus facilement aux nutriments minéraux et à l'eau.

Au global les notations moyennes à T1, T2 et T3 sont les suivantes avec les groupes statistiques issus des tests ANOVA et HDS de Tukey.

| Traitements | | 18-46 (DAP) | C1 | C2 |
|---|---|---|---|---|
| **Valeurs moyennes d'enracinement selon la grille de notations** | T1 | | | |
| | *moyenne* | 0,7 | 1,3 | 1,1 |
| | T2 | | | |
| | *moyenne* | 3,9 | 7,2 | 5,6 |
| | T3 | | | |
| | *moyenne* | 8 | 14,4 | 12,1 |
| **Longueurs cumulées Mesurées par Winrhizo (cm)** | T1 | | | |
| | *moyenne* | 111,97 | 115,26 | 136,85 |
| | T2 | | | |
| | *moyenne* | 1117,95 | 1021,30 | 1009,67 |
| | T3 | | | |
| | *moyenne* | 1770,56 | 2216,65 | 1678,14 |

Ces longueurs de racines sont aussi segmentées par classes de diamètres

| Classes diamètres | | Très petite <0,5mm | Petite 0,5 à 1,0mm | Moyenne 1,0 à 1,5mm | Grande 1,5 à 2mm | Très grande >2mm |
|---|---|---|---|---|---|---|
| **Longueur racinaire cumulées** | C1 (1.0) | | | | | |
| | *moyenne* | 37,78 | 23,84 | 43,58 | 5,60 | 4,44 |
| | C2 (1.0) | | | | | |
| | *moyenne* | 48,22 | 31,01 | 47,31 | 5,76 | 4,53 |
| | DAP (18-46) | | | | | |
| | *moyenne* | 32,09 | 24,51 | 45,71 | 4,91 | 4,73 |

Sur la même expérimentation les mesures winrhizo moyennes des racines font ressortir pour la modalité C1, par rapport au DAP (18-46) : une augmentation de 25% de la longueur de racines totales lié à la présence d'un plus grand nombre de petites racines, au augmentation de +21,7% du volume racinaire calculé d'après la distribution des diamètres mesurés et un accroissement de 22,8% de la surface d'échange (S), également calculée d'après la distribution de diamètres mesurés, suivant la formule suivante :

**Surface d'échange (S)** = (longueur totale de racines par classe de diamètre) x (surface d'un cercle du diamètre de la classe).

L'analyse des distributions de longueurs de racines par classes de diamètres donnée par Winrhizo fait ressortir que les modalités C1 et C2 génèrent plus de petites racines, qui sont en principe des racines plus absorbantes pour la nutrition de la plante.

**4- Exemple** 4 : **Essais terrains Grandes cultures :**

**4.1 Essais Maïs au champ**

Pour compléter les essais en microcosme des exemples précédents, ont été mis en place des essais agronomiques au champ en grandes parcelles :
Les résultats de 107 essais installés en Europe (France, Allemagne, Pologne, Belgique, Pays-bas, République Tchèque, Slovaquie) en 2013 sur maïs grain ou sur maïs ensilage sont résumés ci-après. La répétition du même protocole sur un grand nombre de sites, dans des conditions pédoclimatiques très différentes rend les résultats hautement significatifs.
Modalités : les produits C1 et DAP (18/46) sont apportés à une dose de 100 kg/ha de façon localisée au semis. Un témoin non traité (TNT) est également suivi.
Il n'y a pas eu de correction azotée au semis ni ensuite sur la modalité C1, soit un handicap pour cette modalité de 18kg/ha d'azote et de 46 kg/ha de phosphore par rapport à la modalité DAP. En revanche les apports suivants de fertilisants sont les mêmes entre les modalités DAP et C1. Le seul différentiel concerne donc la fertilisation au semis.
Les résultats des essais sont exprimés en valeurs addimentionnelles afin de permettre une comparaison. La valeur 100 % utilisée correspond soit au témoin non traité, soit à la modalité starter DAP (fertilisant 18/46).

| Modalité | hauteur plante stade 4-6 feuilles mesurées sur 30 plantes par modalité x 107 essais | longueur des racines stade 4-6 feuilles mesurées sur 30 plantes par modalité x 107 essais |
|---|---|---|
| TNT | 100% | 100% |
| DAP | +6,7% | +8,7% |
| C1 | +6,3% | +13,1% |

On observe, sur la moyenne des 107 essais, que l'effet starter induit par la formulation C1 (écart par rapport au témoin TNT) se manifeste tôt tel que mesuré au stade 4-6 feuilles du maïs. A ce stade, on note que la modalité C1 rivalise avec la modalité DAP sur les hauteurs de plantes. En parallèle elle permet de générer plus d'enracinement que la modalité TNT et que la modalité DAP, ce qui permet à la plante d'accéder à plus de volume de sol pour sa nutrition hydrique et minérale.
Sur les mêmes expérimentations, on mesure les rendements à la récolte et les résultats sont répertoriés dans le tableau ci-dessous.

| Modalité | rendement de maïs grain, moyenne des essais | rendement de maïs ensilage, moyenne des essais |
|---|---|---|
| DAP | 100% | 100% |
| C1 | +4,1% | +5% |

On observe, sur la moyenne des essais, que la modalité C1 permet un accroissement sensible du rendement à la récolte, soit en maïs grain + 4,1%, soit en maïs ensilage + 5,0% par rapport à la modalité DAP. Cet effet découle d'une stimulation de l'enracinement et du développement de la rhizosphère plus importants, mais pas d'un effet nutritionnel direct apporté par la modalité C1 puisque les apports en azote et phosphore de la modalité C1 sont respectivement de 1% et 0% par rapport à la modalité DAP qui apporte 18 kg/ha d'azote et 46 kg/ha de phosphore.
Ces résultats confirment, que dans des conditions de culture en champ obtenus sur un grand nombre d'essais maïs, et dans différents contextes pédoclimatique, la formulation C1, sans azote (ou inférieure ou égale à 1 %) et sans phosphore, induit un effet starter sur la plante, un meilleur enracinement et produit au final un meilleur rendement à la récolte.
En outre, ces résultats au champ en condition réelles montrent, que la formulation C1 permet d'accroître l'efficacité de la fertilisation, notamment azotée et phosphatée puisque avec moins de nutriments azote et phosphate, la modalité C1 permet de produire plus de grain (maïs grain) ou plus de biomasse aérienne (maïs ensilage) que la modalité de fertilisation DAP comprenant 18 % d'azote et 43 % de phosphate.

Le produit C1 permet donc de valoriser les éléments présents dans le sol : reliquats et éléments solubles + fertilisation apportée post-levée) et d'augmenter l'assimilation des nutriments par les plantes.

### *4.2 Essais Luzerne 2013 mené Saint Florent le Vieil France - (49) avec les formulations C1 & C2*

- Essai en grandes parcelles, sur sol de type limono argileux avec un bon niveau de fertilité et une bonne capacité de drainage.
- Fertilisation organique: le 20/8/13 apport de 30 T/ha de fumier de chèvre puis le 22/8/13 sont apportés 220m$^3$ de lisier de porc.
- Luzerne variété Canelle, semée le 5/9/13. Précédent cultural : blé.
- Essais en bandes de 6 m de large sur 100 m de long
- Modalités apportées en plein, 1 journée avant le semis : Témoin non traité (TNT) randomisé à l'intérieur de l'essai, C1 apporté sur 10 petites placettes de 60 m$^2$ à la dose de 250 kg/ha, le 4/9/13, C2 sur 10 placettes de 60 m$^2$ à la dose de 250 kg/ha, le 4/9/13

Résultats : La luzerne a émergé le 20 septembre 2013 dans la modalité témoin. En moyenne, celle-ci a émergé 0,4 jours plus tôt sur la modalité C1 et 1,6 jours plus tard, sur la modalité C2. On a donc constaté un petit effet au démarrage pour la modalité C1.

Le comptage du nombre de plantes par m$^2$, le 20/9/13, soit 15 jours après semis par une méthode de 20 sous-échantillonnages de 0,5m$^2$ par modalité donne les valeurs suivantes : 477,2 plantes/m$^2$ pour le TNT, 442 plantes/m$^2$ pour le C1 et 584,2 plantes/m$^2$ pour la modalité C2 soit une levée accrue de 22 % par rapport au témoin non traité.

Les mesures de hauteurs de plantes ont également révélé un effet starter induit par les produits C1 et C2 par rapport à la modalité TNT, qui témoigne de la capacité du produit à stimuler la culture. La mesures des hauteurs de plante (cm) mesurée le 4/10 /13 sur 50 plantes par modalité donnent les valeurs moyennes suivantes : 3,3 cm pour la modalité TNT, 3,7 cm pour la modalité C1 soit un accroissement de 12%, par rapport au témoin non traité, et 5,0 cm soit un accroissement de 51 % pour la modalité C2, par rapport au témoin non traité.

On a donc sur cet essai Luzerne, un effet stimulant sur la date de levée et sur la biomasse aérienne produite 15 jours après semis pour la modalité C2. Un effet sur la biomasse aérienne est également obtenu pour la modalité C1.

### *4.3 Essai Orge de printemps 2013 mené à Suèvres (France - 41)*

Cet essai est mené en 5 blocs randomisés suivant le référentiel des exigences de Bonnes Pratiques d'Expérimentation (BPE)

- Semis le 26/3/13 à la densité de 330 graines/ m$^2$
- Espacement 15 cm, semis à 2,5 cm de profondeur
- Parcelles de 19,9m de long x 2,4m de large
- Précédent blé d'hiver
- Modalités: témoin non traité (TNT), starter 18/46 en localisé au semis à 100kg/ha (DAP), C1 apporté à 100kg/ha en localisé au semis, C2 apporté à 100kg/ha en localisé au semis.
- Aucune correction azotée n'est apportée au semis ni ensuite dans les modalités TNT, C2 et C1, soit un handicap de 18kg/ha d'azote et de 46 kg/ha de Phosphore par rapport à la modalité DAP.
- Localisation des produits : 5 cm à côté de la graine, au semis.

Les rendements de grain ressortent comme suit à la moisson :

- TNT : 67,8 quintaux/ha,
- DAP 79,9 quintaux/ha,
- C1 73,1 quintaux/ha,
- C2 74,5 quintaux/ha.

Dans ce sol à fertilité biologique réduite et à faible taux de phosphore assimilable, la solution préférentielle est celle du DAP. Cependant, on mesure que C1 et C2 permettent également un gain non négligeable de rendement par rapport au TNT et cela témoigne d'un effet positif des produits sur le rendement de la culture d'orge, pour des apports en azote et phosphore réduits.

### 4.4 Essai Pomme de Terre et betterave 2013

- Essais menés en micro-parcelles avec 5 blocs randomisés en conditions BPE.
- Espacement 75 cm, semis à 5 cm de profondeur (pomme de terre)
- Espacement 45 cm, semis à 2 cm de profondeur (betterave)
- Modalités : témoin non traité (TNT), starter 18/46 apporté en localisé 100kg/ha (DAP), C1 apporté à 100kg/ha en localisé, C2 apporté à 100kg/ha en localisé,
- Produits localisés à 5 cm du plant ou de la graine

Aucune correction azotée n'est apportée au semis ou ensuite dans les modalités TNT, C1 et C2 par rapport à la modalité DAP, soit un handicap de 18kg/ha d'azote et 46kg/ha de phosphore par rapport à la fertilisation DAP.
Les 2 sites reçoivent les mêmes modalités : pomme de terre à Allones (France - 49) et Betteraves à Jaulzy (France - 60) en 2013.
A la récolte, on note pour les 2 cultures, une augmentation significative des rendements des modalités C1 et C2 par rapport à la modalité TNT, bien que la modalité DAP soit supérieure.

| Analyse chimique des biomasses aériennes sur pomme de terre et sur betteraves | Modalité | Azote soluble g/100g de protéine |
|---|---|---|
| Jaulzy (betterave) | TNT | 23,3 |
| Jaulzy (betterave) | DAP (18.46) | 14 |
| Jaulzy (betterave) | C1 (1.0) | 25,1 |
| Allones (pomme de terre) | TNT | 16,3 |
| Allones (pomme de terre) | C1 (1.0) | 27,3 |

Les analyses des biomasses aériennes sur pomme de terre et de betteraves à la récolte témoignent d'une bonne nutrition azotée pour la modalité C1, par rapport aux modalités TNT et DAP, malgré un handicap de 18kg/ha d'azote en moins. Ces résultats montrent que le produit C1 de l'invention permet d'augmenter les capacités d'assimilation des nutriments du sol par la plante.
Les rendements à la récolte sont également améliorés pour les 2 cultures avec les modalités C1 et C2 par rapport à la modalité TNT.
Sur pomme de terre, toutes les modalités impactent favorablement le rendement par rapport à la modalité TNT. C1 améliore le rendement de 23 %, C2 de 15 %.
Sur betteraves, la modalité C2 est celle qui offre le meilleur rendement avec une augmentation du rendement de 29% par rapport au TNT tandis que le DAP n'améliore le rendement que de 22%. Le produit C1 améliore le rendement de 13% par rapport au témoin non traité.
Pour ces 2 essais sur cultures, racines de betterave d'une part et de pomme de terre d'autre part, les modalités C1 et C2 améliorent sensiblement le rendement par rapport à la modalité TNT. Sur betterave, la modalité C2 dépasse même la modalité DAP alors qu'elle présente un handicap de fertilisation de 18 kg/ha d'azote et de 46 kg/ha de phosphore. Les impacts des produits C1 et C2 n'étant pas nutritionnels directs. Ils améliorent l'efficacité de la fertilisation en augmentant les capacités d'assimilation par les plantes des nutriments du sol.

### 4.5 Essais Maïs 2014 - C3 et D4

Afin de corriger les différences parfois observées avec les modalités C1 et C2 sans azote et sans phosphore, par rapport à la modalité DAP dans certains des exemples précédents, et pour conserver l'effet starter biologique par rapport à la modalité TNT, les formulations organo-minérales C3 et C4, sensiblement moins dosées en azote et phosphore que le DAP ont été développées et testées au champ en 2014.
Le site de Gardonne (France-24) reçoit le protocole d'essai suivant sur maïs grain en blocs randomisés de micro-parcelles à 5 répétitions en conditions BPE.
Modalités : Témoin non traité (TNT), (DAP) apporté à une dose de 100kg/ha en apport localisé, C1 apporté à une dose de 100kg/ha en apport localisé, C2 apporté à une dose de 100kg/ha en apport localisé, C3 apporté à une dose de 100kg/ha en apport localisé, C4 apporté à 100kg/ha en localisé.

Une correction azotée par apport d'ammonitrate est effectuée sur les modalités C1, C3, C4, C2 et TNT, pour avoir le même niveau d'azote que la modalité DAP et afin de mettre en évidence l'effet starter biologique, qui s'ajoute à l'impact de la fertilisation chimique.

On mesure les hauteurs de plantes à 18 jours du semis pour caractériser l'effet starter sur la culture de Maïs.

Pour le site de Gardonne (France- 24) les hauteurs de plantes à 28 jours (cm) sont supérieures au TNT et au DAP dans les modalités C1, C2 et C3, ce qui témoigne de l'effet starter des formulations. Le C1 est ici au même niveau que le DAP.

|  | Témoin | DAP (18/46) | C1 | C3 | C4 | C2 |
|---|---|---|---|---|---|---|
| Hauteur des plantes à 28 jours (cm) | 40,2 | 40,4 | 40,6 | 41,5 | 41,2 | 41,4 |

*4.6 Essai Orge de printemps 2014, mené à Suèvres (France - 41)*

- Essai BPE réalisé en bloc randomisé avec 8 modalités et 5 répétitions en micro-parcelles de 2,4m de large sur 15 m de long
- Date de semis : le 24 mars 2014, à la densité de 330 graines / m$^2$.
- Orge : variété Grace
- Modalités : fertilisation (DAP, C1, C3, C4) apportée en localisé au semis, à 100 kg/ha sauf pour le témoin non traité (TNT).

Une correction azotée a été effectuée le 28 avril 2014 avec de l'ammonitrate au stade 3 feuilles étalées.

L'effet starter est évalué à partir des mesures de biomasses aériennes et racinaires sur 30 plantes par bloc au stade de fin d'élongation de l'épi, le 6 juin 2014.

|  | Témoin | DAP (18/46) | C1 | C3 | C4 |
|---|---|---|---|---|---|
| Biomasse aérienne (grammes) | 822 | 894 | 848 | 800 | 910 |

On observe une augmentation de 8 % de la biomasse aérienne avec le DAP et de 3 % avec C1, et enfin de 10 % avec C4.

Dans ces conditions on observe que les modalités organo-minérales C1 et C4 génèrent un effet starter visible sur la biomasse aérienne et qu'elles rivalisent avec la modalité de fertilisation minérale 18/46 (DAP).

A la même date, sont mesurées les biomasses racinaires sur les mêmes 30 plantes

|  | Témoin | DAP (18/46) | C1 | C3 | C4 |
|---|---|---|---|---|---|
| Biomasse racinaire (grammes) | 178 | 225 | 210 | 222 | 215 |

On observe une augmentation de 26 % de la biomasse racinaire avec le DAP et de 17 % avec C1, de 24 % avec C3 et enfin de 20 % avec C4. Comme pour les biomasses aériennes, on observe que les modalités organo-minérales C1, C3 et C4 génèrent un effet starter visible sur la biomasse racinaire et qu'elles rivalisent avec la modalité de fertilisation minérale DAP.

**5** - **Exemple** 5 : **caractérisation de la robustesse de l'effet de la composition C4 (T21) sur la mycorhization au champ en conditions pédoclimatiques différentes et sur des variétés de maïs différentes.**

Mesure des paramètres de mycorhization des plantes de maïs dans (6) six sites différents.

La qualité de mycorhization en termes de fréquence et d'intensité, sur les mycorhizes totales et sur les mycorhizes à arbuscule a été suivie au champ sur 6 sites listés dans le tableau ci-dessous.

Pour chacun des 6 sites, sont comparées les 2 modalités fertilisées :

- DAP à 100 kg/ha apporté en localisation au semis.
- T21 (produit C4) apporté en localisation au semis à 100 kg/ha.

Les racines sont ont prélevées au stade 8-10 feuilles du maïs et la mycrohization a été mesurée comme dans l'exemple précédent.

2 sites sont situés dans la manche avec des variétés de maïs pour ensilage et 4 sites sont situés dans le Sud-Ouest de la France avec des variétés de maïs grain. Les 6 sols sont différents et donc ils renferment une biodiversité microbienne locale différente. Les 6 variétés de maïs sont différentes et donc sont d'une génétique différente (tableau ci-dessous).

**Six sites d'expérimentation sur maïs 2014 du produit T21 (C4) avec comptage des mycorhizes**

| Département | site | Maïs | Variété de Maïs | Produit testé = composition C4 |
|---|---|---|---|---|
| Landes | Mallet | Grain | AMILOSE (Maïsadour) | T21 (=C4) |
| Gironde | Kress | Grain | MAS 51G (Maïsadour) | T21 (=C4) |
| Landes | Brethous | Grain | CORRETA CS (Caussade) | T21 (=C4) |
| Landes | Cazenave | Grain | P 0725 (Pioneer) | T21 (=C4) |
| Manche | Le Theil | ensilage | saxophone | T21 (=C4) |
| Manche | Fresville | ensilage | torres | T21 (=C4) |

Les paramètres de mycorhyization pour les différents sites d'expérimentation sont rassemblés dans les tableaux ci-dessous.

| Le Theil | F % | M % | m % | a % | A % |
|---|---|---|---|---|---|
| DAP | 86,7 | 28,5 | 32,7 | 56,1 | 16,0 |
| T21 | 96,7 | 47,4 | 48,9 | 61,5 | 29,3 |

| Fresville | F % | M % | m % | a % | A % |
|---|---|---|---|---|---|
| DAP | 95,6 | 52,6 | 55,1 | 72,3 | 38,2 |
| T21 | 93,3 | 66,2 | 71,0 | 80,7 | 53,5 |

| Cazeneuve | F % | M % | m % | a % | A % |
|---|---|---|---|---|---|
| T | 95,6 | 62,1 | 65,1 | 68,5 | 42,6 |
| T21 | 96,7 | 69,9 | 72,2 | 80,3 | 56,3 |

| Manet | F % | M % | m % | a % | A % |
|---|---|---|---|---|---|
| T | 63,3 | 32,3 | 51,4 | 68,5 | 22,1 |
| T21 | 87,6 | 49,7 | 56,5 | 76,5 | 37,9 |

| Brethous | F % | M % | m % | a % | A % |
|---|---|---|---|---|---|
| T | 94,4 | 60,0 | 63,6 | 67,0 | 40,1 |
| T21 | 100,0 | 75,4 | 75,4 | 76,0 | 57,6 |

| Kress | F % | M % | m % | a % | A % |
|-------|------|------|------|------|------|
| T | 75,6 | 36,0 | 47,8 | 73,9 | 26,5 |
| T21 | 94,4 | 60,8 | 64,4 | 81,5 | 49,7 |

Analyse des échantillons de racines prélevées dans la Manche.

Les différents paramètres de mycorhization mesurés sur les systèmes racinaires des plantes dans le Le-Theil et Fresville, montrent (i) que les champignons MA ont bien colonisé les racines de maïs en formant des arbuscules et *(ii)* qu'il existe des différences significatives entre le DAP et le T21 (C4) pour l'intensité (M%), l'intensité de la colonisation mycorhizienne dans les fragments mycorhizés (m%) et la teneur en arbuscules (A%).

Echantillons de racines prélevées dans les Landes

• Cazeneuve :

Le T21 présente un effet positif sur la mycorhization par rapport au témoin non traité. Cet effet est significatif pour l'abondance en arbuscules dans les parties mycorhizées des fragments racinaires (a%) et la teneur en arbuscules (A%).

• Berthous :

Le T21 favorise la mycorhization des plantes de maïs, cet effet est statistiquement significatif pour les paramètres (M%), (m%) et (A%) par rapport au témoin non traité.

• Manet et Kress :

L'effet positif du T21 sur la mycorhization des plantes de maïs est confirmé dans ces deux sites ; les différences sont significatives entre le T21 et le témoin non traité pour les paramètres (F%) (M%) et (A%).

Au bilan des 6 sites, toutes les variétés sont mycorhizées, quelque-soit le traitement. Ces résultats montrent un effet robuste du T21 (C4) sur le statut mycorhizien des plantes de maïs. L'effet de T21 sur la mycorhization est confirmé dans des écosystèmes microbiens différents et avec des génotypes de plantes de maïs différents. Cet effet est donc robuste.

**Revendications**

1. Utilisation d'une composition organo-minérale pour stimuler le développement d'une plante en augmentant sa capacité d'assimilation des éléments nutritifs du sol, ladite composition comprenant les composés suivants :

| | |
|---|---|
| - Matière organique végétale non fermentée | 13 à 45 % |
| - Carbonate de calcium | 10 à 26 % |
| - Dolomie | 15 à 38 % |
| - NaCl | 0 à 1 % |
| - MgSO$_4$ | 4,5 à 12,75 % |
| - Sulfate d'ammonium | 0 à 25% |
| - Phosphate d'ammonium | 0 à32 % |
| - Lignosulfonate | 5 à 7 % |
| - Soufre élémentaire | 0,00925 à 0, 6604 % |
| - Sulfate de potasse | 0,5 à 2 % |

ladite matière organique végétale non fermentée, comprenant :

- de la farine d'algues ; et
- du tourteau végétal, ou un mélange de tourteaux végétaux, obtenu à partir d'amande, d'arachide, de carthame, de chanvre, de colza, de coprah, de coton, de karité, de lin, de maïs, de noix, d'olive, de palmiste, de pavot, de sésame, de soja ou de tournesol et/ou de la farine de pois, de férevole et/ou de lupin,

ladite composition comprenant une quantité d'azote totale comprise entre 1 et 8% et une quantité totale de phosphore, exprimée en P2O5, allant de 0 à 12%, la matière organique totale de ladite composition organo-minérale ayant un ratio analytique «carbone/azote organique» compris entre 8 et 12, les pourcentages étant exprimés en poids de matière sèche de chacun desdits composés par rapport au poids total de matière sèche de ladite composition organo-minérale.

2. Utilisation d'une composition organo-minérale selon la revendication 1, **caractérisée en ce que** l'augmentation des capacités d'assimilation des éléments nutritifs du sol est obtenue par une stimulation du développement de l'enracinement de ladite plante et/ou de la mycorhization racinaire de ladite plante.

3. Utilisation d'une composition organo-minérale selon l'une des revendications 1 ou 2, **caractérisée en ce que** ladite utilisation améliore en outre le taux de germination et/ou la vitesse de levée de ladite plante.

4. Utilisation d'une composition organo-minérale selon l'une des revendications 1 à 3, **caractérisée** en ce ladite composition comprenant une quantité d'azote totale comprise entre 1 et 3 % en poids par rapport au poids total de matière sèche de ladite composition organo minérale.

5. Utilisation d'une composition organo-minérale selon l'une des revendications 1 à 4, **caractérisée en ce que** la matière organique végétale non fermentée de ladite composition organo-minérale comprend les constituants suivants:

| | |
|---|---|
| - Farine d'algue verte du genre *Ulva* | 1 à 20% |
| - Tourteau végétal ou farine de graine | 0 à 25 % |

les pourcentages étant exprimés en poids de matière sèche de chacun desdits composés par rapport au poids total de matière sèche de ladite composition organo-minérale.

6. Utilisation d'une composition organo-minérale selon l'une des revendications 1 à 5, **caractérisée en ce que** ladite composition organo-minérale comprend en outre au moins un élément, exprimé en milligramme par kilogramme de masse sèche, choisi parmi :

| | |
|---|---|
| - Bore (mg/kg) | 15 à 40 |
| - Iode (mg/kg) | 10 à 70 |
| - Cuivre (mg/kg) | 12 à 25 |
| - Fer (mg/kg) | 2000 à 4500 |
| - Manganèse (mg/kg) | 100 à 250 |
| - Zinc (mg/kg) | 30 à 150 |

7. Utilisation d'une composition organo-minérale selon l'une des revendications 1 à 6, **caractérisée en ce que** ladite composition organo-minérale comprend les composés suivants :

| | |
|---|---|
| - Bicarbonate de sodium (%) | 0,0792 à 0,15849 |
| - Acide borique (%) | 0,00063 à 0,00396 |
| - Sulfate de cuivre (%) | 0,00024 à 0, 00396 |
| - Sulfate de fer (%) | 0,00087 à 0,04349 |
| - Sulfate de manganèse (%) | 0,00462 à 0,03962 |
| - Oxyde de zinc (%) | 0,00063 à 0,00396 |
| - Molybdate de sodium (%) | 0,00063 à 0,00396 |
| - Iodure de potassium (%) | 0,00040 à 0,00317 |

dans laquelle les pourcentages sont exprimés en poids de matière sèche de chacun desdits composés par rapport au poids total de masse sèche de ladite composition organo-minérale.

8. Utilisation d'une composition organo-minérale selon l'une des revendications 1 à 7, **caractérisée en ce que** ladite composition organo-minérale est sous forme solide.

9. Utilisation d'une composition organo-minérale selon l'une des revendications 1 à 8, **caractérisée en ce que** ladite composition organo-minérale est sous forme de granulés.

10. Utilisation d'une composition organo-minérale selon l'une des revendications 1 à 9, **caractérisée en ce que** ladite composition organo-minérale est destinée à un apport localisé au semis ou à la plantation.

11. Utilisation d'une composition organo-minérale selon l'une des revendications 1 à 10, **caractérisée en ce que** ladite plante est une plante annuelle ou bisannuelle, de grande culture.

12. Utilisation d'une composition organo-minérale selon l'une des revendications 1 à 11, **caractérisée en ce que** ladite utilisation s'effectue selon une dose comprise entre 80 et 250 kg/ha.

13. Utilisation d'une composition organo-minérale selon la revendication 12, **caractérisée en ce que** ladite utilisation s'effectue selon une dose comprise entre 100 et 120 kg /ha.

14. Composition organo-minérale comprenant les éléments suivants :

| | |
|---|---|
| - Carbonate de calcium (%) | 10 à 26 |
| - Dolomie (%) | 15 à 38 |
| - NaCl (%) | 0 à 1 |
| - Sulfate de potasse (%) | 0,5 à 2 |
| - MgSo4 (%) | 6 à 17 |
| - Phosphate d'ammonium | 0 à 32 |
| - Farine d'algue verte du genre ULVA (%) | 1 à 20 |
| - Tourteau végétal ou farine de graine (%) | 0 à 25 |
| - Lignosulfonates (%) | 5 à 7 |
| - Bicarbonate de sodium (%) | 0, 0792 à 0,15849 |
| - Soufre élémentaire (%) | 0,00925 à 0, 06604 |
| - Acide borique (%) | 0,00063 à 0,00396 |
| - Sulfate de cuivre (%) | 0,00024 à 0, 00396 |
| - Sulfate de.fer (%) | 0,00087 à 0,04349 |
| - Sulfate de manganèse (%) | 0,00462 à 0,03962 |
| - Oxyde de zinc (%) | 0,00063 à 0,00396 |
| - Molybdate de sodium (%) | 0,00063 à 0,00396 |
| - Iodure de potassium (%) | 0,00040 à 0,00317 |

dans laquelle les pourcentages sont exprimés en poids de matière sèche de chacun des composés par rapport au poids total de matière sèche de ladite composition organo-minérale, le total étant ajusté à 100%.

**Patentansprüche**

1. Verwendung einer organisch-mineralischen Zusammensetzung zur Stimulation der Entwicklung einer Pflanze durch Erhöhen ihrer Aufnahmefähigkeit der Nährstoffe des Bodens, wobei die Zusammensetzung die folgenden Verbindungen umfasst:

| | |
|---|---|
| - nicht fermentiertes pflanzliches organisches Material | 13 bis 45 % |
| - Calciumarbonat | 10 bis 26 % |
| - Dolomit | 15 bis 38 % |
| - NaCl | 0 bis 1 % |

(fortgesetzt)

| | |
|---|---|
| - MgSO$_4$ | 4,5 bis 12,75 % |
| - Ammoniumsulfat | 0 bis 25 % |
| - Ammoniumphosphat | 0 bis 32 % |
| - Lignosulfonat | 5 bis 7 % |
| - elementarer Schwefel | 0,00925 bis 0,6604 % |
| - Kaliumsulfat | 0,5 bis 2 % |

wobei die nicht fermentierte pflanzliche organische Materie umfasst:

- Algenmehl; und
- Pflanzenpresskuchen oder ein Gemisch aus Pflanzenpresskuchen, erhalten aus Mandel, Erdnuss, Saflor, Hanf, Raps, Kopra, Baumwolle, Shea, Leinen, Mais, Nuss, Olive, Palmkern, Mohn, Sesam, Soja oder Sonnenblume und/oder Erbs-, Favabohnen- und/oder Lupinenmehl,

wobei die Zusammensetzung eine Menge Stickstoff insgesamt umfasst, die zwischen 1 und 8 % liegt, und eine Menge Phosphor insgesamt, ausgedrückt in P$_2$O$_5$, die von 0 bis 12 % reicht, wobei die organische Materie insgesamt der organisch-mineralischen Zusammensetzung ein analytisches Verhältnis "Kohlenstoff/organischer Stickstoff" hat, das zwischen 8 und 12 liegt, wobei die Prozentsätze in Gewicht Trockensubstanz jeder der Verbindungen in Bezug auf das Gesamtgewicht Trockensubstanz der organisch-mineralischen Zusammensetzung ausgedrückt ist.

2. Verwendung einer organisch-mineralischen Zusammensetzung nach Anspruch 1, **dadurch gekennzeichnet, dass** die Erhöhung der Aufnahmefähigkeit der Nährstoffe des Bodens durch eine Stimulierung der Entwicklung der Verwurzelung der Pflanze und/oder der Wurzelmykorrhization der Pflanze erhalten wird.

3. Verwendung einer organisch-mineralischen Zusammensetzung nach einem der Ansprüche 1 oder 2, **dadurch gekennzeichnet, dass** die Verwendung ferner die Keimungsrate und/oder die Emergenzgeschwindigkeit der Pflanze verbessert.

4. Verwendung einer organisch-mineralischen Zusammensetzung nach einem der Ansprüche 1 bis 3, **dadurch gekennzeichnet, dass** die Zusammensetzung eine Menge Stickstoff insgesamt umfasst, die zwischen 1 und 3 Gew.-% in Bezug auf das Gesamtgewicht Trockensubstanz der organisch-mineralischen Zusammensetzung liegt.

5. Verwendung einer organisch-mineralischen Zusammensetzung nach einem der Ansprüche 1 bis 4, **dadurch gekennzeichnet, dass** die nicht fermentierte pflanzliche organische Materie der organisch-mineralischen Zusammensetzung die folgenden Bestandteile umfasst:

| | |
|---|---|
| - Grünalgenmehl der Spezies *Ulva* | 1 bis 20 % |
| - Pflanzenkuchen oder Saatenmehl | 0 bis 25 % |

wobei die Prozentsätze in Gewicht Trockensubstanz jeder der Verbindungen in Bezug auf das Gesamtgewicht Trockensubstanz der organisch-mineralischen Zusammensetzung ausgedrückt sind.

6. Verwendung einer organisch-mineralischen Zusammensetzung nach einem der Ansprüche 1 bis 5, **dadurch gekennzeichnet, dass** die organisch-mineralischen Zusammensetzung ferner mindestens ein Element, ausgedrückt in Milligramm je Kilogramm Trockenmasse, umfasst, ausgewählt aus:

| | |
|---|---|
| - Bor (mg/kg) | 15 bis 40 |
| - Jod (mg/kg) | 10 bis 70 |
| - Kupfer (mg/kg) | 12 bis 25 |
| - Eisen (mg/kg) | 2000 bis 4500 |
| - Mangan (mg/kg) | 100 bis 250 |
| - Zink (mg/kg) | 30 bis 150 |

7. Verwendung einer organisch-mineralischen Zusammensetzung nach einem der Ansprüche 1 bis 6, **dadurch gekennzeichnet, dass** die organisch-mineralische Zusammensetzung die folgenden Verbindungen umfasst:

| | |
|---|---|
| - Natriumbicarbonat (%) | 0,0792 bis 0,15849 |
| - Borsäure (%) | 0,00063 bis 0,00396 |
| - Kupfersulfat (%) | 0,00024 bis 0,00396 |
| - Eisensulfat (%) | 0,00087 bis 0,04349 |
| - Mangansulfat (%) | 0,00462 bis 0,03962 |
| - Zinkoxid (%) | 0,00063 bis 0,00396 |
| - Natriummolybdat (%) | 0,00063 bis 0,00396 |
| - Kaliumjodid (%) | 0,00040 bis 0,00317 |

wobei die Prozentsätze in Gewicht Trockensubstanz jeder der Verbindungen in Bezug auf das Gesamtgewicht Trockenmasse der organisch-mineralischen Zusammensetzung ausgedrückt sind.

8. Verwendung einer organisch-mineralischen Zusammensetzung nach einem der Ansprüche 1 bis 7, **dadurch gekennzeichnet, dass** die organisch-mineralische Zusammensetzung in fester Form vorliegt.

9. Verwendung einer organisch-mineralischen Zusammensetzung nach einem der Ansprüche 1 bis 8, **dadurch gekennzeichnet, dass** die organisch-mineralische Zusammensetzung in Form von Granulat vorliegt.

10. Verwendung einer organisch-mineralischen Zusammensetzung nach einem der Ansprüche 1 bis 9, **dadurch gekennzeichnet, dass** die organisch-mineralische Zusammensetzung für eine lokale Zugabe zur Saat oder zur Anpflanzung bestimmt ist.

11. Verwendung einer organisch-mineralischen Zusammensetzung nach einem der Ansprüche 1 bis 10, **dadurch gekennzeichnet, dass** die Pflanze eine einjährige oder zweijährige Großkulturpflanze ist.

12. Verwendung einer organisch-mineralischen Zusammensetzung nach einem der Ansprüche 1 bis 11, **dadurch gekennzeichnet, dass** die Verwendung gemäß einer Dosis erfolgt, die zwischen 80 und 250 kg/ha liegt.

13. Verwendung einer organisch-mineralischen Zusammensetzung nach Anspruch 12, **dadurch gekennzeichnet, dass** die Verwendung gemäß einer Dosis erfolgt, die zwischen 100 und 120 kg/ha liegt.

14. Organisch-mineralischen Zusammensetzung, umfassend die folgenden Elemente:

| | |
|---|---|
| - Calciumcarbonat (%) | 10 bis 26 |
| - Dolomit (%) | 15 bis 38 |
| - NaCl (%) | 0 bis 1 |
| - Kaliumsulfat (%) | 0,5 bis 2 |
| - $MgSO_4$ (%) | 6 bis 17 |
| - Ammoniumphosphat | 0 bis 32 |
| - Grünalgenmehl der Spezies ULVA (%) | 1 bis 20 |
| - Pflanzenkuchen oder Saatenmehl (%) | 0 bis 25 |
| - Lignosulfonate (%) | 5 bis 7 |
| - Natriumbicarbonat (%) | 0,0792 bis 0,15849 |
| - elementarer Schwefel (%) | 0,00925 bis 0,06604 |
| - Borsäure (%) | 0,00063 bis 0,00396 |
| - Kupfersulfat (%) | 0,00024 bis 0,00396 |
| - Eisensulfat (%) | 0,00087 bis 0,04349 |
| - Mangansulfat (%) | 0,00462 bis 0,03962 |
| - Zinkoxid (%) | 0,00063 bis 0,00396 |
| - Natriummolybdat (%) | 0,00063 bis 0,00396 |
| - Kaliumjodid (%) | 0,00040 bis 0,00317 |

wobei die Prozentsätze in Gewicht Trockensubstanz jeder der Verbindungen in Bezug auf das Gesamtgewicht Trockensubstanz der organisch-mineralischen Zusammensetzung ausgedrückt sind, wobei Gesamt auf 100 % angepasst ist.

**Claims**

1. Use of an organomineral composition for stimulating the development of a plant by increasing its ability to assimilate soil nutrients, said composition comprising the following compounds:

| | |
|---|---|
| - Unfermented vegetable organic matter | 13 to 45 % |
| - Calcium carbonate | 10 to 26 % |
| - Dolomia | 15 to 38 % |
| - NaCl | 0 to 1 % |
| - $MgSO_4$ | 4.5 to 12.75 % |
| - Ammonium sulphate | 0 to 25% |
| - Ammonium phosphate | 0 to 32 % |
| - Lignosulfonate | 5 to 7 % |
| - Elemental sulphur | 0.00925 to 0.6604 % |
| - Sulphate of potash | 0.5 to 2 % |

said unfermented vegetable organic matter comprising:

- seaweed meal; and
- vegetable cake, or a mixture of vegetable cakes, obtained from almond, peanut, safflower, hemp, rape, copra, cotton, shea, flax, maize, walnut, olive, palm kernel, poppy, sesame, soya or sunflower and/or pea, ferevol and/or lupin flour,

said composition comprising a total amount of nitrogen ranging from 1 to 8% and a total amount of phosphorus, expressed as P2O5, ranging from 0 to 12%, the total organic matter of said organomineral composition having an analytical "carbon/organic nitrogen" ratio ranging from 8 to 12, the percentages being expressed in weight of dry matter of each of said compounds relative to the total weight of dry matter of said organomineral composition.

2. The use of an organomineral composition according to claim 1, **characterised in that** the increase in the assimilation capacities of soil nutrients is obtained by stimulating the development of the rooting of said plant and/or the root mycorrhization of said plant.

3. The use of an organomineral composition according to one of claims 1 or 2, **characterised in that** said use further improves the germination rate and/or the rate of emergence of said plant.

4. The use of an organomineral composition according to one of claims 1 to 3, **characterised in that** said composition comprises a total amount of nitrogen of between 1 and 3% by weight relative to the total weight of dry matter of said organomineral composition.

5. The use of an organomineral composition according to one of claims 1 to 4, **characterised in that** the unfermented vegetable organic matter of said organomineral composition comprises the following constituents:

| | |
|---|---|
| - Flour of green algae of the genus *Ulva* | 1 to 20% |
| - Vegetable cake or seed flour | 0 to 25 % |

the percentages being expressed in weight of dry matter of each of said compounds with respect to the total weight of dry matter of said organomineral composition.

6. The use of an organomineral composition according to one of claims 1 to 5, **characterised in that** said organomineral composition further comprises at least one element, expressed in milligrams per kilogram of dry mass, selected from:

| | |
|---|---|
| - Boron (mg/kg) | 15 to 40 |
| - Iodine (mg/kg) | 10 to 70 |
| - Copper (mg/kg) | 12 to 25 |
| - Iron (mg/kg) | 2000 to 4500 |
| - Manganese (mg/kg) | 100 to 250 |
| - Zinc (mg/kg) | 30 to 150 |

7. The use of an organomineral composition according to one of claims 1 to 6, **characterised in that** said organomineral composition comprises the following compounds:

| | |
|---|---|
| - Sodium bicarbonate (%) | 0.0792 to 0.15849 |
| - Boric acid (%) | 0.00063 to 0.00396 |
| - Copper sulphate (%) | 0.00024 to 0. 00396 |
| - Iron sulphate (%) | 0.00087 to 0.04349 |
| - Manganese sulphate (%) | 0.00462 to 0.03962 |
| - Zinc oxide (%) | 0.00063 to 0.00396 |
| - Sodium molybdate (%) | 0.00063 to 0.00396 |
| - Potassium iodide (%) | 0.00040 to 0.00317 |

wherein the percentages are expressed in weight of dry matter of each of said compounds relative to the total weight of dry matter of said organomineral composition.

8. The use of an organomineral composition according to one of claims 1 to 7, **characterised in that** said organomineral composition is in solid form.

9. The use of an organomineral composition according to one of claims 1 to 8, **characterised in that** said organomineral composition is in the form of granules.

10. The use of an organomineral composition according to one of claims 1 to 9, **characterised in that** said organomineral composition is intended for localized addition to sowing or planting.

11. The use of an organomineral composition according to one of claims 1 to 10, **characterised in that** said plant is an annual or biennial, field crop plant.

12. The use of an organomineral composition according to one of claims 1 to 11, **characterised in that** said use is carried out in a dose of between 80 and 250 kg/ha.

13. The use of an organomineral composition according to claim 12, **characterised in that** said use is carried out in a dose of between 100 and 120 kg /ha.

14. An organomineral composition comprising the following elements:

| | |
|---|---|
| - Calcium carbonate (%) | 10 to 26 |
| - Dolomite (%) | 15 to 38 |
| - NaCl (%) | 0 to 1 |
| - Sulphate of potash (%) | 0.5 to 2 |
| - MgSo4 (%) | 6 to 17 |
| - Ammonium phosphate | 0 to 32 |
| - Flour of green algae of the genus ULVA (%) | 1 to 20 |
| - Vegetable cake or seed meal (%) | 0 to 25 |
| - Lignosulphonates (%) | 5 to 7 |
| - Sodium bicarbonate (%) | 0.0792 to 0.5849 |

(continued)

| | |
|---|---|
| - Elemental sulphur (%) | 0.00925 to 0.06604 |
| - Boric acid (%) | 0.00063 to 0.00396 |
| - Copper sulphate (%) | 0.00024 to 0.00396 |
| - Iron sulphate (%) | 0.00087 to 0.04349 |
| - Manganese sulphate (%) | 0.00462 to 0.03962 |
| - Zinc oxide (%) | 0.00063 to 0.00396 |
| - Sodium molybdate (%) | 0.00063 to 0.00396 |
| - Potassium iodide (%) | 0.00040 to 0.00317 |

wherein the percentages are expressed as the weight of dry matter of each of the compounds relative to the total weight of dry matter of said organomineral composition, the total being adjusted to 100%.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2941589
- WO 0024255 A
- FR 2941592
- EP 1241149 A
- WO 2009082351 A
- EP 2229054 A
- WO 2014049546 A
- WO 2008062035 A
- WO 201386405 A
- WO 2014062929 A
- WO 2010049817 A
- WO 8200999 A
- WO 2006082264 A
- WO 2012006382 A
- WO 2010068932 A
- WO 2013040403 A
- WO 2013159061 A
- WO 2011125714 A
- WO 2006000396 A
- FR 2357505
- EP 2128116 A
- EP 1103535 A
- WO 2013159708 A
- WO 2013159706 A
- WO 2008105035 A
- EP 2333086 A
- WO 2014025275 A
- WO 0196259 A
- WO 2010012952 A
- WO 9107868 A
- FR 2865897
- FR 2539736
- FR 2778120
- FR 2897148